(19) Europäisches Patentamt / European Patent Office / Office européen des brevets

(11) **EP 3 770 549 B1**

(12) **EUROPEAN PATENT SPECIFICATION**

(45) Date of publication and mention
of the grant of the patent:
**21.09.2022 Bulletin 2022/38**

(21) Application number: **19771762.2**

(22) Date of filing: **13.02.2019**

(51) International Patent Classification (IPC):
$G01C\ 21/36$ (2006.01)  $G06T\ 7/536$ (2017.01)
$G01B\ 11/02$ (2006.01)  $B60W\ 30/09$ (2012.01)
$G08G\ 1/16$ (2006.01)  $G01C\ 3/08$ (2006.01)

(52) Cooperative Patent Classification (CPC):
**G01C 21/3602; G01B 11/026; G01C 3/08;
G01S 17/86; G01S 17/931; G06T 7/536;
G06V 20/58; G08G 1/165; G08G 1/166;
G08G 1/167**

(86) International application number:
**PCT/JP2019/005044**

(87) International publication number:
**WO 2019/181284 (26.09.2019 Gazette 2019/39)**

(54) **INFORMATION PROCESSING DEVICE, MOVEMENT DEVICE, METHOD, AND PROGRAM**

INFORMATIONSVERARBEITUNGSVORRICHTUNG, BEWEGUNGSVORRICHTUNG,
VERFAHREN UND PROGRAMM

DISPOSITIF DE TRAITEMENT D'INFORMATIONS, DISPOSITIF DE MOUVEMENT, PROCÉDÉ ET
PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2018 JP 2018056512**

(43) Date of publication of application:
**27.01.2021 Bulletin 2021/04**

(73) Proprietors:
• **Sony Group Corporation
Tokyo 108-0075 (JP)**
• **Sony Semiconductor Solutions Corporation
Atsugi-shi, Kanagawa 243-0014 (JP)**

(72) Inventors:
• **OBA, Eiji
Atsugi-shi, Kanagawa 243-0014 (JP)**
• **TSURUMI, Shingo
Tokyo 108-0075 (JP)**

(74) Representative: **Witte, Weller & Partner
Patentanwälte mbB
Postfach 10 54 62
70047 Stuttgart (DE)**

(56) References cited:
JP-A- H0 935 197  JP-A- H10 255 071
JP-A- 2007 240 422  JP-A- 2013 114 585
JP-A- 2016 009 331  JP-A- 2016 009 331
JP-A- 2016 057 698  JP-A- 2017 191 471

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to an information processing device, a movement device, and a method, and a program. More specifically, the present disclosure relates to an information processing device, a movement device, and a method, and a program for calculating a distance to an object in a leftward or rightward direction that is orthogonal to a traveling direction of a movement device such as an automobile, by using a camera captured image.

BACKGROUND ART

In recent years, a variety of driving assistance systems for automatic braking, automatic speed control, obstacle detection, or the like have been developed, and in the future, it is expected that an automatic driving vehicle that does not require a driver's operation or a vehicle that is mounted with a driving assistance system that reduces a driver's operation will increase.

For safe traveling of an automobile, distances to a variety of objects, such as a vehicle, a pedestrian, or a wall, that hinder movement need to be calculated.

Examples of a distance measurement device that calculates an object distance include the devices described below.

For example, the following distance measurement devices are known:

(a) Light detection and ranging or laser imaging detection and ranging (LiDAR) that acquires peripheral information by using a pulse laser beam;
(b) Radar that detects reflected waves of radio waves and measures a distance to a reflection object; and
(c) Stereo camera that calculates a distance to an object in a captured image by analyzing corresponding points in images captured by two cameras.

However, all of these distance measurement devices are expensive.

An example of an inexpensive distance measurement instrument is a distance sensor that uses a laser beam, infrared light, or the like that has a low output. However, in this inexpensive distance sensor, a measurable distance range is limited. For example, a distance of about 10 to 15 m can be measured.

Accordingly, even if such an inexpensive distance sensor is attached to an automobile, the inexpensive distance sensor fails to be used to detect a distance to, for example, a vehicle that is approaching from a distant place at high speed.

In order to measure distances in all directions, forward, backward, leftward, and rightward directions, of an automobile by using a high-precision distance measurement instrument, as described above as (a) to (c), at least four distance measurement devices need to be respectively attached on front, rear, left-hand, and right-hand sides, and a cost increases.

Accordingly, in a case where a distance measurement device is attached to an automobile, a configuration is often employed in which the distance measurement device is only attached on a front side of the automobile.

As a specific example, a distance measurement device, such as a LiDAR or a stereo camera, is only attached, for example, on a front side of an automobile, and a relatively low-cost camera is attached in four positions, front, rear, left-hand, and right-hand positions, of the automobile. As the camera, for example, an around view imaging camera using a wide-angle lens, or the like is used.

By attaching a camera using a wide-angle lens on each of the left-hand and right-hand sides of an automobile, a vehicle or the like that is approaching from a leftward or rightward direction of the automobile can be captured in a field of view. However, a captured image of this camera using a wide-angle lens has distortion in contrast to an image of a monofocal length. For example, even if a driver views the image, it is difficult for the driver to intuitively grasp a distance to each subject. Furthermore, there is a problem in which it is difficult for a driver to intuitively grasp an accurate distance to each subject from an image, even if distortion is corrected and the captured image is converted into a central projection image.

Examples of a prior art that discloses a configuration that detects danger in a direction that is different from a traveling direction of an automobile include Patent Document 1 (Japanese Patent Application Laid-Open No. 2017-191471) and Patent Document 2 (Japanese Patent Application Laid-Open No. 2009-067292).

Patent Document 1 discloses a blind spot assistance system in entering a crossing road from a narrow crossroads. However, in this disclosed technology, only a timing at which an approach situation of an approaching vehicle can be visually observed is reported.

Patent Document 2 discloses a configuration that cuts out and displays a video in a specified orientation from an omnidirectional camera.

In both Patent Documents 1 and 2 described above, in a case where there is an automobile or the like that is approaching from a leftward or rightward direction of an automobile, an image of the approaching automobile or the like is provided to a driver, and then, the driver needs to judge a degree of danger on the basis of the image. In a case where the driver does not have a sufficient sense of judging the degree of danger based on the image, there is a possibility of causing danger.

Stated another way, Patent Documents 1 and 2 only disclose a configuration that provides a driver with an image indicating that a dangerous automobile or the like is approaching, and distance information of an object, such as an automobile, that is approaching from a leftward or rightward direction is not provided.

Patent Document JP 2016 009331 A describes a vehicle surroundings monitoring apparatus capable of recognizing, with appropriate accuracy, a target object existing in the surroundings of a vehicle by effectively using an area magnification ratio of an image portion of a target object. The vehicle is equipped with a camera capturing images in the movement direction of the vehicle. The vehicle surroundings monitoring apparatus detects a point at infinity from the captured image and calculates an object distance by using information relating to a positional relationship between a position of the point at infinity and a position of the object in the captured image.

SUMMARY OF THE INVENTION

PROBLEMS TO BE SOLVED BY THE INVENTION

The present disclosure has been made in view of, for example, the problems described above, and it is an object of one example of the present disclosure to provide an information processing device, a movement device, and a method, and a program that are capable of calculating a distance to an object in a leftward or rightward direction that is orthogonal to or crosses a traveling direction of a movement device such as an automobile, by only using a camera captured image.

Furthermore, it is an object of one example of the present disclosure to provide an information processing device, a movement device, and a method, and a program that are capable of calculating a distance to an object in a leftward or rightward direction that is orthogonal to a traveling direction of a movement device such as an automobile, by using an inexpensive distance sensor and a camera captured image.

SOLUTIONS TO PROBLEMS

According to the invention, an information processing device, a movement device, an information processing method and a program are provided as defined in the appended claims.

Note that the program according to the present disclosure is, for example, a program that can be provided for an information processing device or a computer system that can execute a variety of program codes by a storage medium or a communication medium that provides the program in a computer-readable form. By providing such a program in the computer-readable form, processing according to the program is performed on the information processing device or the computer system.

Yet other objects, features, or advantages of the present disclosure will be clarified by a more detailed description based on the examples described later of the present disclosure or the attached drawings. Note that a system described herein is a logical aggregative configuration of a plurality of devices, and does not always include devices having respective configurations in the same housing.

EFFECTS OF THE INVENTION

By employing a configuration in one example of the present disclosure, a configuration is achieved that calculates an object distance on the basis of a captured image of a camera that captures an image in a direction that is orthogonal to a movement direction of a movement device or in a direction having an orthogonal component.

Specifically, for example, a data processing unit detects a point at infinity from a captured image of a camera that captures an image in a direction that is orthogonal to a movement direction of a movement device or in a direction having an orthogonal component, and calculates an object direction by using information relating to a positional relationship between a position of the detected point at infinity and a position of an object in the captured image. The data processing unit detects, from the captured image, a plurality of parallel lines on a real world that extends in a direction away from a camera position, and determines an intersection point on extended lines of the detected plurality of parallel lines to be the point at infinity. Alternatively, an intersection point on respective extended lines of the straight lines in an image frame unit is determined to be the point at infinity, directions of the straight lines changing on the captured image in accordance with a movement of the camera.

By employing the present configuration, a configuration is achieved that calculates an object distance on the basis of a captured image of a camera that captures an image in a direction that is orthogonal to a movement direction of a movement device.

Note that effects described herein are only illustrative, and are not restrictive. Furthermore, additional effects may be exhibited.

BRIEF DESCRIPTION OF DRAWINGS

Fig. 1 is a diagram explaining an example of a configuration of a movement device.
Fig. 2 is a diagram explaining an example of setting of a measurable area of a distance sensor attached to the movement device and an image capturing area of a camera.
Fig. 3 is a diagram explaining an example of processing for calculating an object distance.
Fig. 4 is a diagram explaining an example of an object serving as a distance calculation target.
Fig. 5 is a diagram explaining one example of processing for detecting a point at infinity that is applied to calculation of an object distance.
Fig. 6 is a diagram explaining one example of object distance calculation processing.
Fig. 7 is a diagram explaining one example of processing for detecting a point at infinity that is applied to calculation of an object distance.
Fig. 8 is a diagram explaining one example of object distance calculation processing.
Fig. 9 is a diagram explaining one example of object distance calculation processing.
Fig. 10 is a diagram explaining one example of object distance calculation processing.
Fig. 11 is a diagram explaining one example of object distance calculation processing.
Fig. 12 is a diagram explaining one example of object distance calculation processing.
Fig. 13 is a diagram explaining one example of object distance calculation processing.
Fig. 14 is a diagram explaining one example of object distance calculation processing.
Fig. 15 is a diagram explaining one example of object distance calculation processing.
Fig. 16 is a diagram illustrating a flowchart explaining a sequence of object distance calculation processing performed by an information processing device.
Fig. 17 is a diagram illustrating a flowchart explaining a sequence of object distance calculation processing performed by the information processing device.
Fig. 18 is a diagram explaining one example of a configuration of a vehicle control system of the movement device.
Fig. 19 is a diagram explaining an example of a hardware configuration of the information processing device.

MODE FOR CARRYING OUT THE INVENTION

Details of an information processing device, a movement device, and a method, and a program according to the present disclosure are described below with reference to the drawings. Note that description is provided according to the items described below.

1. Example of configuration of movement device according to the present disclosure
2. Specific examples of point-at-infinity calculation processing and object distance calculation processing

2-1. (Processing Example 1) Example of processing for detecting position of point at infinity by using a plurality of parallel lines included in camera captured image
2-2. (Processing Example 2) Example of processing for detecting position of point at infinity by using one line segment included in camera captured image

3. Other examples of object distance calculation processing

3-1. (Processing Example 1) Example of object distance calculation processing in case where image having certain width, such as road, is included in respective positions of distance calculation target object and reference point object
3-2. (Processing Example 2) Example of object distance calculation processing in case where distance calculation target object includes component having known actual size

4. Sequence of processing performed by information processing device
5. Example of configuration of movement device

6. Example of configuration of information processing device

7. Summary of configuration according to the present disclosure

[1. Example of configuration of movement device according to the present disclosure]

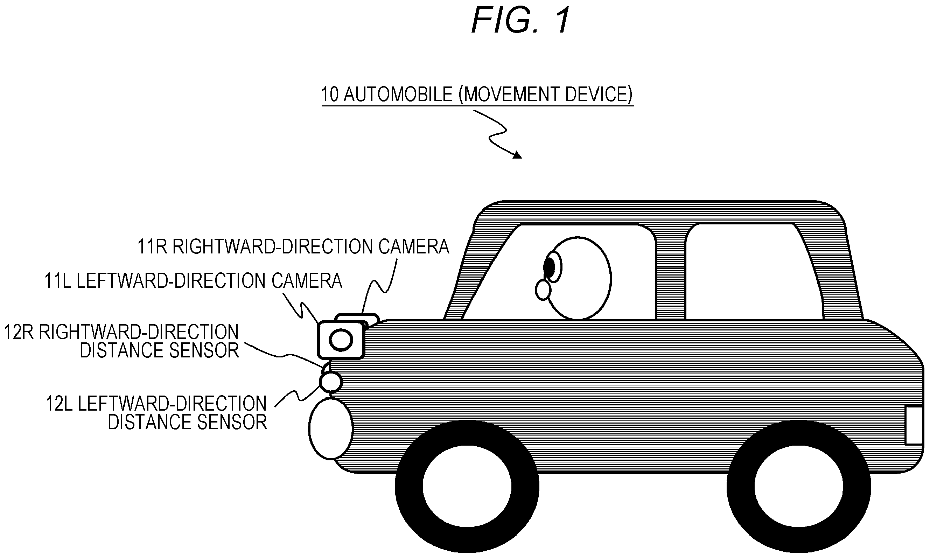

First, an example of a configuration of a movement device according to the present disclosure is described with reference to Fig. 1 and the drawings that follow.

Fig. 1 illustrates an automobile 10 that is one example of the movement device according to the present disclosure.

Note that, in the example described below, as one example of the movement device, an example is described where the movement device is the automobile 10. However, a configuration or processing according to the present disclosure can be used in a variety of movement devices other than an automobile.

For example, the configuration or the processing according to the present disclosure can be applied to a variety of movement devices such as a robot that travels in a warehouse, an office, or the like.

As illustrated in Fig. 1, the automobile 10 is attached with a plurality of cameras and a plurality of distance sensors.

Note that the distance sensors are not an essential configuration in some processes according to the present disclosure, and some processes according to the present disclosure can be performed even in a configuration that does not include any distance sensors.

The attached cameras are described below.

The following two cameras are attached:

a leftward-direction camera 11L that images a leftward direction of the automobile 10; and
a rightward-direction camera 11R that images a rightward direction of the automobile 10.

These cameras capture an image in a direction that is orthogonal to a movement direction of the automobile 10.

Note that, as these cameras 11L and 11R, a camera that captures a normal image or a camera (a monocular camera) that includes a wide-angle lens such as a fisheye lens can be used.

The automobile 10 is further attached with the following two distance sensors as the distance sensors:

a leftward-direction distance sensor 12L that measures an object distance in a leftward direction of the automobile 10; and
a rightward-direction distance sensor 12R that measures an object distance in a rightward direction of the automobile 10.

Note that, as described above, these distance sensors are not an essential configuration, and a configuration that does not include any distance sensors may be employed.

Even in a configuration that includes distance sensors, it is sufficient if an inexpensive distance zensor that uses, for example, a laser beam or infrared light having a low output is used as each of the distance sensors. It is sufficient if a distance sensor is used that has, for example, a distance measurement range of about 10 to 15 m at maximum.

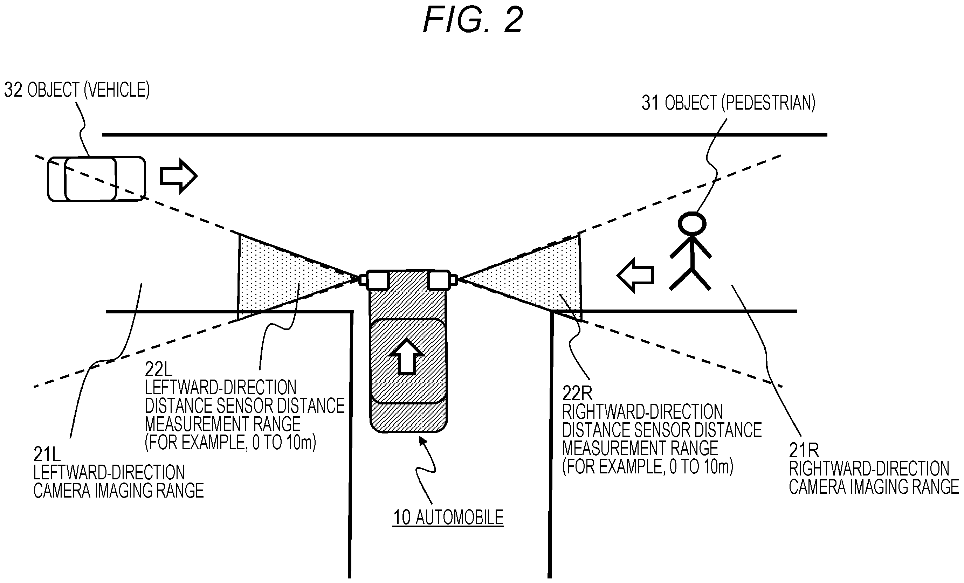

Examples of an image capturing range and a distance measurement range of this automobile 10 that is attached with the cameras 11L and 11R and the distance sensors 12L and 12R are illustrated in Fig. 2.

Fig. 2 illustrates the following respective areas.

Leftward-direction camera imaging range 21L that is an imaging area of the leftward-direction camera 11L,
Rightward-direction camera imaging range 21R that is an imaging area of the rightward-direction camera 11R,
Leftward-direction distance sensor distance measurement range 22L that is a distance measurement range of the leftward-direction distance sensor 12L, and
Rightward-direction distance sensor distance measurement range 22R that is a distance measurement range of the rightward-direction distance sensor 12R.

The leftward-direction distance sensor distance measurement range 22L and the rightward-direction distance sensor distance measurement range 22R fall, for example, within about 10 m from the automobile 10.

The cameras 11L and 11R can capture an image of an object (a pedestrian) 31 or an object (a vehicle) 32 that is illustrated in Fig. 2.

However, the distance sensors 12L and 12R fail to directly measure a distance to the object (the pedestrian) 31 or the object (the vehicle) 32 that is described above.

As illustrated in Fig. 2, when the automobile 10 goes out from an intersection of narrow alleys or goes out from one of the parallel parking frames that are occupied by vehicles, in some cases, a vehicle that is approaching from a left-hand or right-hand side is located in a blind spot of a direct field of view of a driver, and the vehicle that is approaching from the left-hand or right-hand side fails to be visually recognized.

A system has already been proposed that is mounted with a wide-angle camera or a prism-type camera on front and rear sides of a vehicle body and presents a camera captured image to a driver. However, an image that has been cut out from a wide-angle image includes distortion, and a depth feeling is lost.

Therefore, there is a problem in which the driver fails to accurately grasp a distance to an approaching object, such as a vehicle or a person, that is included in the image, even in a situation where the vehicle or the person is approaching.

In order for a driver to perform safe driving, it is requested that distance information of an object be accurately reported to the driver.

A device (a movement device or an information processing device) in one example of the present disclosure can estimate a distance to an object that is present in a distant place on a left-hand or right-hand side of the automobile 10 on the basis of only a captured image of the camera 11L or 11R that images a leftward or rightward direction of the automobile 10, and can report an approach risk to a driver.

Furthermore, a device (a movement device or an information processing device) in one example of the present disclosure can estimate a distance to an object that is present in a distant place on a left-hand or right-hand side of the automobile 10 on the basis of a captured image of the camera 11L or 11R that images a leftward or rightward direction of the automobile 10, and distance information of a close object (a reference point object) that has been measured by an inexpensive distance sensor 12L or 12R that can measure a distance only in a close area, and can report an approach risk to a driver.

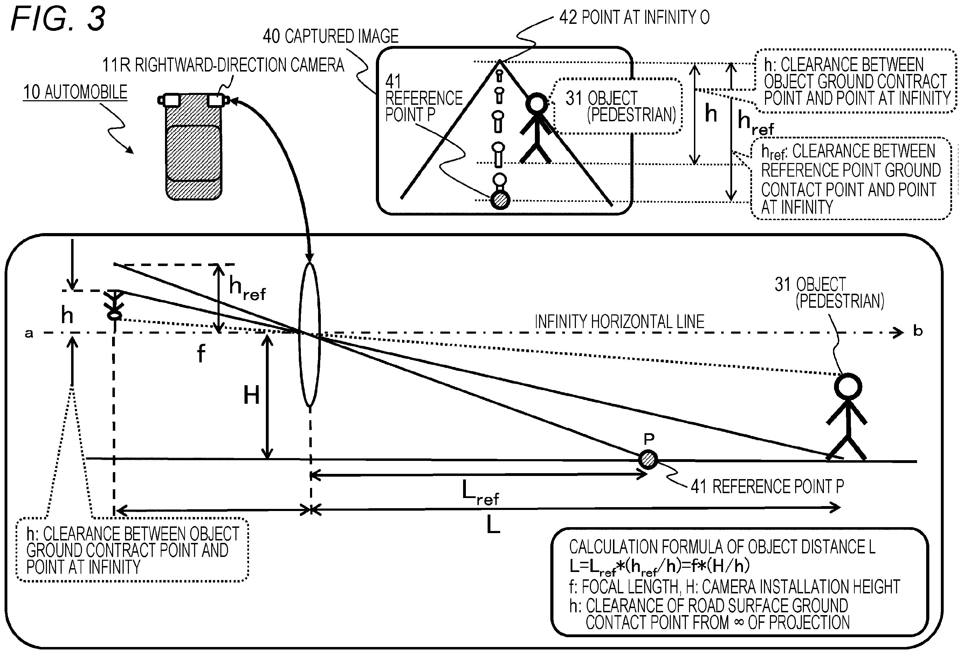

An example of calculating an object distance is described with reference to Fig. 3.

Fig. 3 is a diagram explaining an example of calculating an object distance by using a central projection image serving as a captured image of a camera.

Fig. 3 illustrates an example of processing for estimating an object distance on the basis of geometric information of a road or a peripheral environment object.

Note that the description herein is provided under the assumption that a real space projection image of a captured image of a camera is converted into a central projection image. In recent years, in many on-vehicle cameras, a fisheye wide-angle camera has been widely used due to a need for acquiring image information in a wider range of a vehicle. In this case, in a scheme of projection of a wide-angle real space to an imaging plane, a conventional central projection image that is often said to not include distortion is not obtained. However, an image that corresponds to central projection in an orientation specified according to a projection scheme of a fisheye lens that is determined according to physical optical design can be converted into a captured image plane according to a virtual central projection scheme, by converting an image that has been captured by a fisheye lens into a central projection image in a corresponding orientation that has been determined according to a projection conversion function. Thus, even in a case where the fisheye lens is used, processing that is similar to the processing described herein can be performed. Therefore, a description that uses a camera system using a projection scheme of a fisheye lens is omitted herein.

Fig. 3 is a diagram explaining an example of calculating an object distance by using a captured image 40 of the rightward-direction camera 11R.

It is assumed that the rightward-direction camera 11R has been installed at a certain height H from a flat road surface.

The captured image (a central projection image) 40 of this camera 11R includes an object (a pedestrian) 31 serving as a distance measurement target.

Note that the captured image (the central projection image) 40 includes, as a captured image, a reference point P 41 that corresponds to a close object that is located in a position in which a distance can be measured by the rightward-direction distance sensor 12R, and a point at infinity O 42.

A distance (a horizontal distance to a position of an entrance pupil of a camera) L from the rightward-direction camera 11R to the object (the pedestrian) 31 can be uniquely calculated according to the calculation formula described below (Formula 1), if an installation height H and a focal length f of a camera 12 are fixed.

$$L = Lref \times (href/h) = f \times (H/h) \quad \text{(Formula 1)}$$

In this formula,

f: Focal length of camera,
H: Installation height (height from reference plane (= road surface)) of camera,

h: Clearance (clearance in image upward or downward direction) between object ground contact point (contact point with reference plane (road surface)) and point at infinity on captured image,

Lref: Distance (actual distance) to referent point P (on reference plane (road surface)), and

href: Clearance (clearance on image in image upward or downward direction) between reference point P and point at infinity on captured image.

As expressed by (Formula 1) described above, the distance L to the object (the pedestrian) 21 can be expressed to be in inverse proportion to a clearance on a projected image between a road surface contact point of the object and a point at horizontal infinity.

As described above, also for a distant object to which a distance fails to be measured by a distance sensor 12, an object distance can be calculated according to (Formula 1) described above by using an image captured by a camera 11.

However, in order to calculate an object distance by applying (Formula 1) described above, calculation processing applying either (Formula 1a) or (Formula 1b) described below is required.

$$L = Lref \times (href/h) \quad \text{(Formula 1a)}$$

$$L = f \times (H/h) \quad \text{(Formula 1b)}$$

From among parameters included in (Formula 1) described above, the following parameters are known:

f: Focal length of camera, and

H: Installation height (height from reference plane (= road surface)) of camera.

In this setting, in order to calculate an object distance L by using (Formula 1a) described below:

$$L = Lref \times (href/h) \quad \text{(Formula 1a)},$$

values of the following respective parameters need to be obtained.

Lref: Distance (actual distance) to referent point P (on reference plane (road surface)),

h: Clearance (clearance on image in image upward or downward direction) between object ground contact point (contact point with reference plane (road surface)) and point at infinity on captured image, and

href: Clearance (clearance on image in image upward or downward direction) between reference point P and point at infinity on captured image.

In a case where (Formula 1a) described above is used, first, a close object that is located in a position where a distance can be measured by the rightward-direction distance sensor 12R is selected as a reference point P, and a distance to the reference point P is measured. Therefore, a distance Lref to the reference point P is obtained.

Moreover, the parameters h and href need to be obtained. Processing for obtaining these parameters h and href is described next.

Furthermore, in a case where (Formula 1b) described below is used:

$$L = f \times (H/h) \quad \text{(Formula 1b)},$$

values of the following parameters need to be obtained.

h: Clearance (clearance on image in image upward or downward direction) between object ground contact point (contact point with reference plane (road surface)) and point at infinity on captured image

Note that, in object distance calculation processing using (Formula 1b) described above, a distance to the reference point P does not need to be calculated, and an automobile that does not include any distance sensors can also calculate an object distance on the basis of only a captured image.

Specific examples of point-at-infinity calculation processing and object distance calculation processing that are required in processing for calculating the parameters h and href are described below.

[2. Specific examples of point-at-infinity calculation processing and object distance calculation processing]

Next, specific examples of point-at-infinity calculation processing and object distance calculation processing using an image captured by a camera 11 are described.

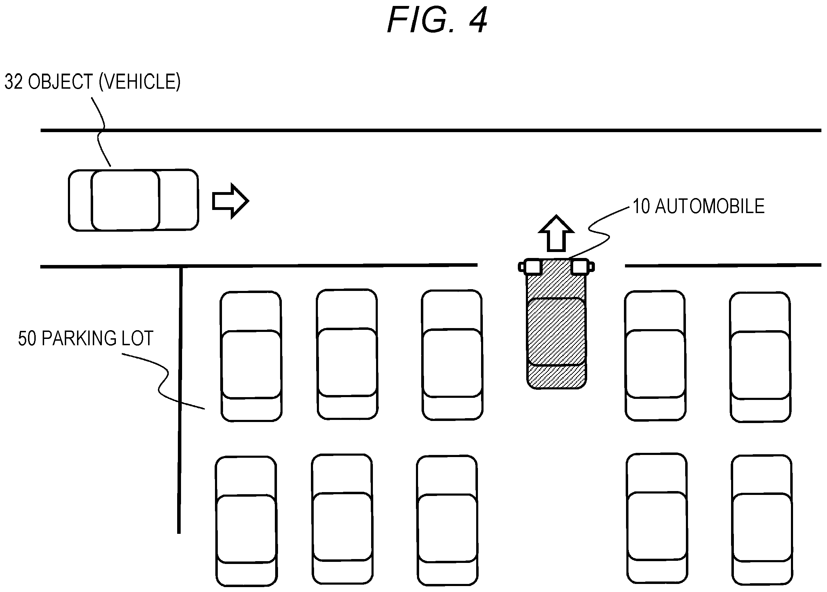

For example, as illustrated in Fig. 4, in a case where the automobile 10 is about to go out from a parking lot 50, it is assumed that an object (a vehicle) 32 that is approaching from a lateral direction is present.

In such a case, a driver fails to visually recognize the object (the vehicle) 32 at first. Only after about half of the automobile 10 enters a road, the driver can visually recognize the object (the vehicle) 32.

In such a situation, it is requested that the automobile 10 perform the following processes:

1. Move in a travelling direction at low speed; and
2. Check a situation on left-hand and right-hand sides, and perform driving according to a checked situation.

It is captured images of the leftward-direction camera 11L and the rightward-direction camera 11R of the automobile 10 that enable the situation on the left-hand and right-hand sides to be checked in an earlier stage.

A movement device according to the present disclosure or an information processing device mounted in the movement device uses captured images of the leftward-direction camera 11L and the rightward-direction camera 11R of the automobile 10, and calculates a distance to an object (an object such as a vehicle or a person) that is included in the captured images.

Alternatively, an object distance is calculated by using the captured images of the leftward-direction camera 11L and the rightward-direction camera 11R, and measured distance information of the distance sensors 12L and 12R that can measure a distance to an object only in left-hand or right-hand close areas of the automobile 10.

Specifically, as described above, the object distance is calculated according to (Formula 1) described below.

$$L = Lref \times (href/h) = f \times (H/h) \qquad \text{(Formula 1)}$$

In this formula,

f: Focal length of camera,
H: Installation height (height from reference plane (= road surface)) of camera,
h: Clearance (clearance on image in image upward or downward direction) between object ground contact point (contact point with reference plane (road surface)) and point at infinity on captured image,
Lref: Distance (actual distance) to referent point P (on reference plane (road surface)), and
href: Clearance (clearance on image in image upward or downward direction) between reference point P and point at infinity on captured image.

In (Formula 1) described above, the following values are known:

f: Focal length of camera, and
H: Installation height (height from reference plane (= road surface)) of camera.
Lref: Distance (actual distance) to reference point P (on reference plane (road surface))

This distance to the reference point P can be obtained by using a distance sensor 12.
If the remaining parameters, that is, the parameters described below, can be obtained:

h: Clearance (clearance on image in image upward or downward direction) between object ground contact point (contact point with reference plane (road surface)) and point at infinity on captured image, and
href: Clearance (clearance on image in image upward or downward direction) between reference point P and point at infinity on captured image,
the object distance L can be calculated.

A position of an object ground contact point (a contact point with a reference plane (a road surface)) on a captured image or a reference point P on the captured image can be obtained from the captured image.

Accordingly, in order to calculate the parameters h and href, it is sufficient if a position of a point at infinity on the captured image is obtained.

A plurality of examples of processing for detecting the position of a point at infinity on a captured image is described below.

The following two processing examples are sequentially described.

(Processing Example 1) Example of processing for detecting position of point at infinity by using a plurality of parallel lines included in camera captured image

(Processing Example 2) Example of processing for detecting position of point at infinity by using one line segment included in camera captured image

[2-1. (Processing Example 1) Example of processing for detecting position of point at infinity by using a plurality of parallel lines included in camera captured image]

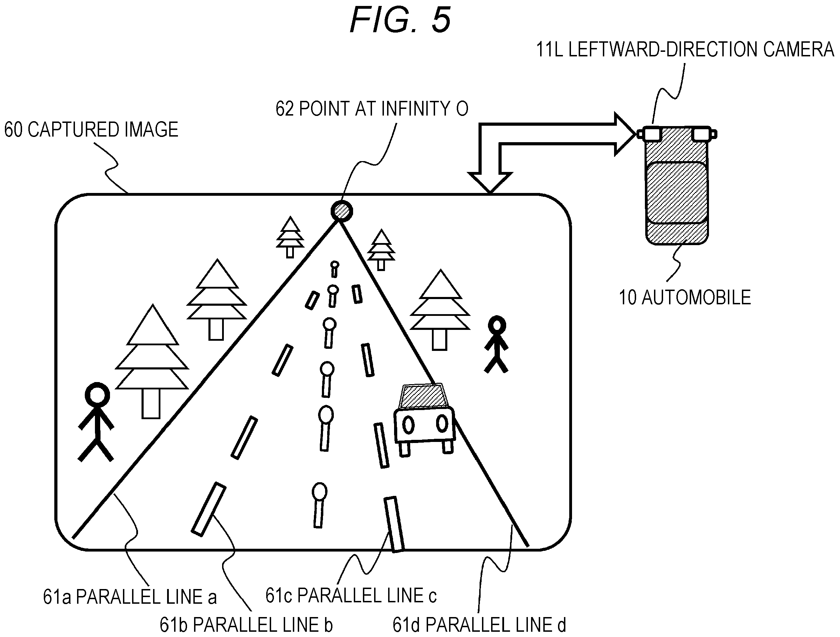

First, as Processing Example 1, an example of processing for detecting the position of a point at infinity by using a plurality of parallel lines included in a camera captured image is described with reference to Fig. 5.

Note that, in the description below of an example, processing applying an image captured by the leftward-direction camera 11L is described. However, processing applying an image captured by the rightward-direction camera 11R is also performed as similar processing.

First, it is determined whether or not a parallel line can be detected from a road surface included in a captured image of the leftward-direction camera 11L. Note that the parallel line is not a parallel line on an image, but is a parallel line in the real world and is a parallel line that extends in a direction away from a camera position.

Specifically, examples include a median strip of a road, a separation white line, a lane separation white line, a separation block or a separation white line between a road and a sidewalk, and the like.

In the example illustrated in Fig. 5 of a captured image 60, four parallel lines, a parallel line a 61a, a parallel line b 61b, a parallel line c 61c, and a parallel line d 61d, are detected.

In a case where a plurality of parallel lines (parallel lines in the real world) has been detected from the captured image 60, an estimated intersection point at infinity on the extensions of the plurality of parallel lines is determined to be a point at infinity O 62.

As described above, the point at infinity O 62 on the captured image is detected.

Note that, in the description of the present disclosure, a point at infinity has been detected under the assumption that a road surface is always located on the same road surface as a road surface on which a vehicle travels or all of the detected parallel lines are parallel or quasi-parallel to a vehicle installation surface.

When a parallel line segment caused by a road (such as a lane, a road shoulder curb, a sidewalk, or a sidewalk boundary line) has an inclination with respect to a corresponding vehicle installation flat plane, an orientation of a point at infinity of a group of parallel lines is determined according to an orientation $\alpha$ of the inclination. If an optical axis of central projection matches infinity of a flat plane of interest, in a case where each inclination $\alpha$ is formed with the same flat plane, an image that corresponds to an orientation $\alpha$ determined according to a focal length is projected to a capturing imaging device to shift to a position of f*tan($\alpha$). Therefore, correction of this needs to be performed on a point at infinity of an inclined parallel line viewed from the vehicle installation flat plane.

On the other hand, in a case where the same vehicle is always traveling on a flat road and as long as a detected road is maintained on the same flat plane, a point at infinity of a road parallel line segment in a captured image does not move in horizontal and upward or downward directions, and is always located on a horizontal line including the same horizontal infinity. Then, a position in a lateral orientation of the horizontal line is determined according to an orientation of the road flat plane. For convenience of description, the description below is provided under the assumption that a camera facing sideways is attached in an orientation that is perpendicular to a horizontal plane in a forward or backward movement orientation of a vehicle and a parallel line segment has an angle $\beta$ with respect to the optical axis of the camera. Stated another way, an orientation $\beta$ of a detected line segment in the case of measurement by using, as reference, a right angle with respect to an orientation of translational traveling of a vehicle hardly moves in a small translational movement of the vehicle. Furthermore, similarly, no movement is performed if the world is completely configured by a flat plane. This is because an object that has a determined orientation and is located at a point at infinity maintains a certain direction, unless the object itself rotates.

The optical axis of a camera directed in a lateral orientation does not always need to be perpendicular to a traveling direction. However, for convenience of description, in a case where the optical axis is perpendicular to the traveling direction, a group of lines having a vanishing point in an orientation in which an amount of shift in a lateral direction from the optical axis of the camera is f*tan($\beta$) is always line segments having an inclination of $\pi/2-\beta$ with respect to the traveling direction of the vehicle.

However, an intersection point within a single-frame image captured as an image is only a "point at infinity" that is an optical illusion, and line segments in the real world are not always parallel lines. When the estimation of a point at infinity is simply applied to an intersection point of a plurality of line segments in a screen that is imaged as a projection video of the real world space, a visual "point at infinity" that is only an illusion is treated as a point at infinity, and this causes an illusion error in the calculation of a distance.

Accordingly, in practice, a detected line is present on a plane that is not located on a traveling flat plane of a vehicle, and therefore exclusion processing or calibration processing needs to be appropriately performed. Moreover, even when an extracted line segment is located on a road, in some cases, one boundary line or both boundary lines have been designed in such a way that a lane is narrowed as a tapered road for convenience of road design, and as a result, a road is viewed in which a pair of boundary lines to be detected are partially inclined. When a distance is calculated under the assumption that an intersection point of these detected line segments is always a point at infinity, a result including an illusion error is obtained.

On a flat road, a structural change in a vehicle body is a change, such as rolling, pitching, or the sinking of suspension, in the vehicle body due to loading, and if there is no change in the positions or orientations of a camera and a road surface, an upward or downward orientation at infinity that is detected by the camera do not change.

Furthermore, a horizontal orientation is determined according to a traveling orientation of a traveling vehicle of a corresponding vehicle with respect to a road surface. Accordingly, normally, an influence of not-parallel lines on an intersection point of detected line segments only changes when a road itself is curved or has ups and downs or when a state where a camera is attached to the local car has changed due to an accident, a failure, or the like of the local car. Accordingly, a comparison may be made on the basis of a history, and every time there is a change, the displacement described above may be evaluated in detail. A local dynamic map or the like may be referred to, information relating to a flat plane or a curve of a road in a field of view of a camera may be combined and evaluated. There are a variety of calibration means, such as inter-frame image analysis based on a movement change or correction using SLAM described later, in resources and resources allowed as countermeasures.

Furthermore, in a case where a more inexpensive system is used, and fails to perform stable and reliable measurement, the system may be only used to call a driver's attention by giving a warning to the driver in a case where there is a risk of a distance estimation error, without providing a user with accurate distance conversion information.

As described above, a data processing unit of the information processing device according to the present disclosure detects, from a camera captured image, a plurality of parallel lines on the real world that extends in a direction away from a camera position, and determines an intersection point on extended lines of the detected plurality of parallel lines to be a point at infinity. Alternatively, an intersection point on respective extended lines of the straight lines in an image frame unit is determined to be the point at infinity, directions of the straight lines changing on the captured image in accordance with a movement of the camera.

Note that all of the detected parallel line segments on the real space cross each other in an orientation at infinity inside a field of view or outside the field of view, excluding a case where the parallel line segments have been imaged from a vertical direction. Stated another way, if an orientation that the parallel lines face falls within a range of an imaging angle of view of imaging in central projection, an intersection point of corresponding parallel lines is drawn at a projection point in the orientation within a field of view. The present disclosure uses a feature in which parallel lines cross each other at a point at infinity, as a geometric property of projection of central projection, and uses the feature to calculate a distance by deriving a point at infinity of drawing of the parallel lines and using the point at infinity.

However, when line segments cross each other on a projection plane of an imaging plane, line segments on a projection plane of central projection are not always parallel lines in the real space. Line segments are parallel to each other only in the case described later where a single detected line segment has the same center point of rotation on coordinates with a projection image point that is located in an infinity direction as a center point, in accordance with a translational movement of an imaging camera. Stated another way, a detected parallel line segment that has been captured by a camera mounted on a movement device has an orientation at infinity that does not changes according to movement, and is fixed at infinity with respect to an orientation that corresponds to an orientation of the parallel line segment in a captured image that has been captured in central projection. The parallel line segment rotates with a point at infinity as a center. If a translational distance of a vehicle is a close distance of about several meters, it can be considered that a drawing position in a central projection image in an orientation of a distant part of a local road is almost constant.

Even if a completely translational parallel movement can be technically performed in a long distance of several hundred meters or several kilometers, in normal traveling, a point at infinity that is viewed in a distant place is not tracked in a movement in such a wide range, and it can be considered that the point at infinity is not a target to be detected in the present disclosure. A range to which the present disclosure can be applied is a very short translational movement such as a vehicle entering a crossroads or the like by a front part of the vehicle, and the present disclosure is applied to a range in which it can be considered that a point at infinity is fixed and constant where parallel segments of a detected peripheral road captured by an on-vehicle camera are converged.

In other words, if a vehicle moves in a traveling direction, a line segment of a parallel line that is present on a plane that matches the same corresponding road surface flat plane as a road flat place on which the vehicle travels follows translation in images of frames according to traveling, and a vanishing point at infinity of the line segment maintains a constant position. Moreover, a part that is close to the line segment moves in a reversing direction according to the traveling of the vehicle. Therefore, the line segment changes to rotate around the vanishing point at infinity among the frames. Details will be described later, but it is sufficient if these substantial points at infinity are appropriately calibrated, by using a point at which all of the objects in a screen laterally move in inverse proportion to a distance in accordance with a lateral movement in an orientation that crosses an optical axis of a central projection image. The information processing device according to the present disclosure place accurately estimates a point at infinity by analyzing the coordinates of a line segment, as described above.

If a point at infinity O 62 on a captured image can be detected, the parameters described below can be calculated:

h: Clearance (clearance on image in image upward or downward direction) between object ground contact point (contact point with reference plane (road surface)) and point at infinity on captured image; and

href: Clearance (clearance on image in image upward or downward direction) between reference point P and point at infinity on captured image.

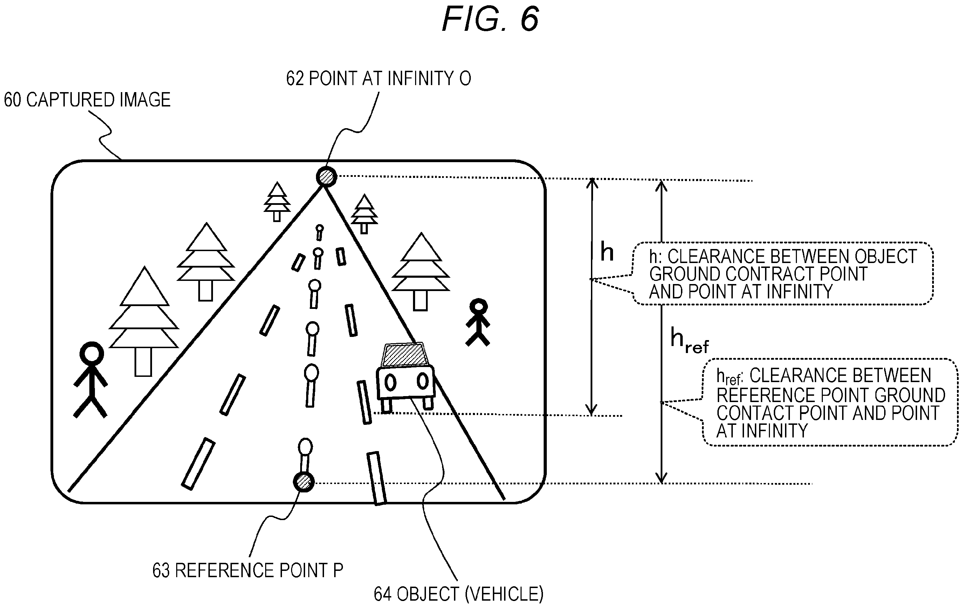

This processing is described with reference to Fig. 6.

Note that, in Fig. 6, it is assumed that an object serving as a distance calculation target is an object (a vehicle) 64.

As illustrated in Fig. 6,

the parameter h is a clearance (a clearance on an image in an image upward or downward direction) between a ground contact point (a contact point with a reference plane (a road surface)) of the object (the vehicle) 64 and a point at infinity O 62 on a captured image, and

the parameter href is a clearance (a clearance on the image in the image upward or downward direction) between a reference point P 63 and the point at infinity O 62 on the captured image.

These two clearances are clearances on the image, and can be directly obtained from the image.

As a result of this, an object distance can be calculated according to (Formula 1) described below that has been described above.

$$L = Lref \times (href/h) = f \times (H/h) \quad \text{(Formula 1)}$$

Note that, in order to calculate an object distance by applying (Formula 1) described above, either (Formula 1a) or (Formula 1b) described below can be used, as described above.

$$L = Lref \times (href/h) \quad \text{(Formula 1a)}$$

$$L = f \times (H/h) \quad \text{(Formula 1b)}$$

From among parameters included in the respective formulae described above, the following parameters are known:

f: Focal length of camera; and
H: Installation height (height from reference plane (= road surface)) of camera.

Note that, here, there is a possibility that H will change according to a loading amount object or the like of a vehicle. However, in a vehicle that has started traveling, a change during correspondence is a temporary name and a change that are caused by the working conditions of suspension or the like. Therefore, self-calibration can be appropriately performed on a center value of H via a reference measurement means, every time traveling is started.

Furthermore, in a case where a lens is used that projects and converts the real space into a captured image plane in a projection scheme of normal central projection, a focal length f has a fixed value based on design. However, in performing calculation on the basis of a virtual central projection image obtained by performing image conversion in a specified orientation on the basis of an image according to a projection scheme that is different from central projection, such as stereographic projection conversion using a fisheye lens, it is sufficient if a conversion value of a small distance that is assumed in a virtual projection scheme of this time is substituted.

In this setting, in order to calculate an object distance L by using (Formula 1a) described below:

$$L = Lref \times (href/h) \quad \text{(Formula 1a),}$$

values of the following respective parameters need to be obtained.

Lref: Distance (actual distance) to reference point P (on reference plane (road surface))
h: Clearance (clearance on image in image upward or downward direction) between object ground contact point (contact point with reference plane (road surface)) and point at infinity on captured image
href: Clearance (clearance on image in image upward or downward direction) between reference point P and point at infinity on captured image

In a case where (Formula 1a) described above is used, first, a close object that is located in a position where a distance can be measured by the leftward-direction distance sensor 12L is selected as a reference point P, and a distance to the reference point P is measured. Therefore, a distance Lref to the reference point P is obtained.

Moreover, the parameters h and href are obtained on the basis of the point at infinity O 62 that has been detected in the processing described with reference to Fig. 6.

By using these parameters, the object distance can be calculated according to (Formula 1a) described below:

$$L = Lref \times (href/h) \quad \text{(Formula 1a)}.$$

Furthermore, in a case where (Formula 1b) described below is used:

$$L = f \times (H/h) \quad \text{(Formula 1b)},$$

the parameter h is obtained on the basis of the point at infinity O 62 that has been detected in the processing described with reference to Fig. 6.

By using this parameter, the object distance can be calculated according to (Formula 1b) described below:

$$L = f \times (H/h) \quad \text{(Formula 1b)}.$$

Note that, in object distance calculation processing using (Formula 1b) described above, a distance to the reference point P does not need to be calculated, and an automobile that does not include any distance sensors can also calculate an object distance on the basis of only a captured image.

Note that, in order to calculate a point at infinity on the basis of a camera captured image in the processing described above, it is preferable that the data processing unit of the information processing device according to the present disclosure have, for example, a configuration that have the functions described below.

(Function 1) Function of detecting, from a camera captured image, a plurality of lines on the real world space that extends in a direction away from a camera position, and analyzing a change in the coordinates of a line segment among frames of a plurality of line segments that has been detected to determine whether or not corresponding line segments are a combination of parallel lines in the real world space

(Function 2) Function of detecting, from a camera captured image, a plurality of lines on the real world space that extends in a direction away from a camera position, and determining whether a plurality of line segments that has been detected is parallel line segments or non-parallel line segments

(Function 3) Function of detecting, from a camera captured image, a plurality of lines on the real world space that extends in a direction away from a camera position, and detecting that the coordinates of a crossing peak of a combination of detected line segments sequentially move among frames in accordance with a translational movement of a vehicle

[2-2. (Processing Example 2) Example of processing for detecting position of point at infinity by using one line segment included in camera captured image]

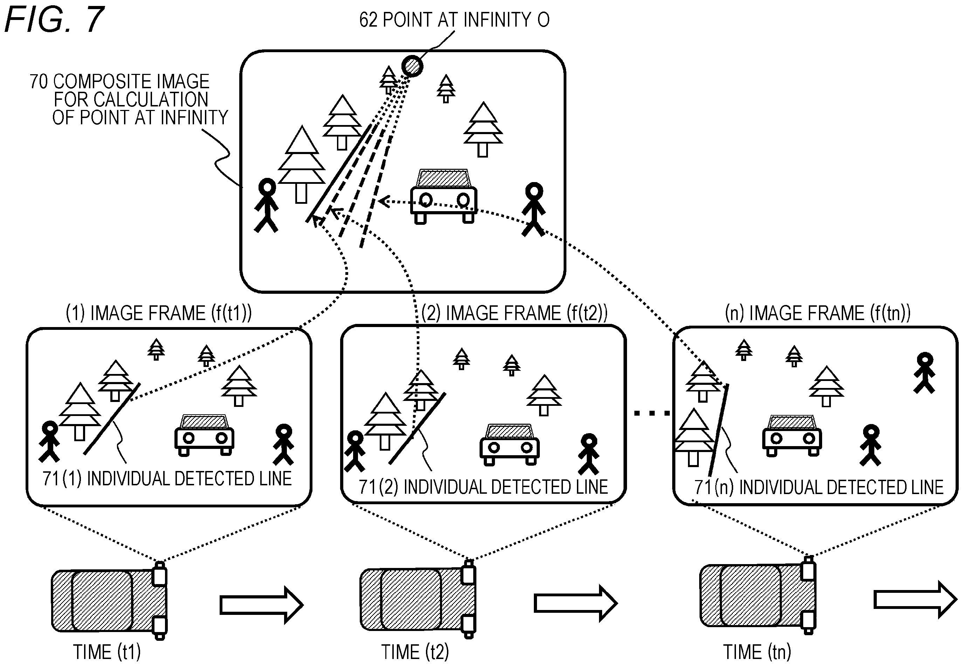

Next, as Processing Example 2, an example of processing for detecting the position of a point at infinity by using one line segment included in a camera captured image is described with reference to Fig. 7.

In a case where a plurality of parallel lines has failed to be detected from a captured image of a camera 11 of the automobile 10, a change in an individual detected line segment that occurs according to a slight translation of the automobile 10 is tracked, a peak of the center of rotation is searched for, and a center point of rotation is determined to be an (estimated) point at infinity.

A specific example is described with reference to Fig. 7.

Image Frame (f(t1)) of Fig. 7(1) is a captured image of the leftward-direction camera 11L at time t1.

Image Frame (f(t2)) of Fig. 7(2) is a captured image of the leftward-direction camera 11L at time t2 after time t1.

Thereafter, a captured image of the leftward-direction camera 11L is captured at predetermined time intervals, and

Image Frame (f(tn)) of Fig. 7(n) is a captured image of the leftward-direction camera 11L at time tn that follows.

These n captured images indicate n individual detected lines 71(1), 71(2), ..., 71(n) that each indicates the same subject.

Note that an individual detected line serving as a detection target is a straight line that extends in a direction away from a position (= a camera position) of the automobile 10.

According to the traveling of the automobile 10, a direction of an individual detected line 71 slightly changes.

An upper portion of Fig. 7 illustrates a composite image 70 for calculating a point at infinity in which the n individual detected lines 71(1), 71(2), ..., 71(n) are displayed on the same image.

A point at which the n individual detected lines 71(1), 71(2), ..., 71(n) on this composite image are extended and cross each other is determined to be a point at infinity O 62.

As described above, in a case where a plurality of parallel lines fails to be detected from a captured image, a change in an individual detected line segment that occurs according to a slight translation of the automobile 10 is tracked, a peak of the center of rotation is searched for, and a center point of rotation is determined to be an (estimated) point at infinity O 62.

As described above, the information processing device in the movement device detects, from a captured image, a straight line on the real world that extends in a direction away from a camera position, detects an intersection point on respective extended lines of straight lines in an image frame unit for which a direction changes on the captured image in accordance with a movement of a camera, and determines the position of this intersection point to be a point at infinity.

If the point at infinity O 62 on the captured image is detected, the parameters described below can be obtained:

h: Clearance (clearance on image in image upward or downward direction) between object ground contact point (contact point with reference plane (road surface)) and point at infinity on captured image; and
href: Clearance (clearance on image in image upward or downward direction) between reference point P and point at infinity on captured image.

If these parameters can be obtained, an object distance can be calculated according to (Formula 1) described below that has been described above.

$$L = Lref \times (href/h) = f \times (H/h) \qquad (Formula\ 1)$$

Note that, in this processing described with reference to Fig. 7, in a case where the automobile 10 has advanced straight, that is, in a case where the automobile 10 has traveled in a direction that forms a right angle with an individual detected line, no particular correction is required. However, in a case where the automobile 10 does not advance straight, that is, in a case where the automobile 10 does not travel in a direction that forms a right angle with an individual detected line, for example, in a case where the automobile 10 has travels to rotate by $\Delta\theta$, yaw rotation is generated by $\Delta\theta$ in each imaging frame. Accordingly, if a line segment in a captured image faces an infinity direction of an optical axis, an intersection point at a point at infinity of the line segment horizontally and laterally shifts by $f \times tan(\Delta\theta)$, and therefore this needs to be corrected.

Note that the position of a point at infinity is almost fixed in continuous captured image frames.

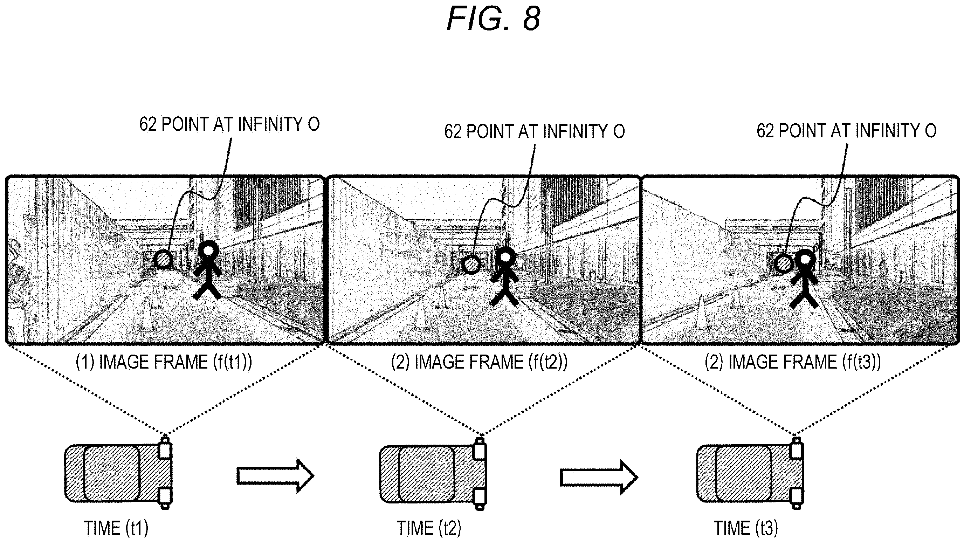

Fig. 8 is a diagram illustrating an example of infinity O 62 that is detected in each of the continuous captured image frames.

This is the point at infinity O 62 that has been calculated according to the method described with reference to Fig. 5, 6, or 7.

As illustrated, the infinity O 62 that is detected in each of the continuous captured image frames is a point that is fixed in almost the same position in each of the images.

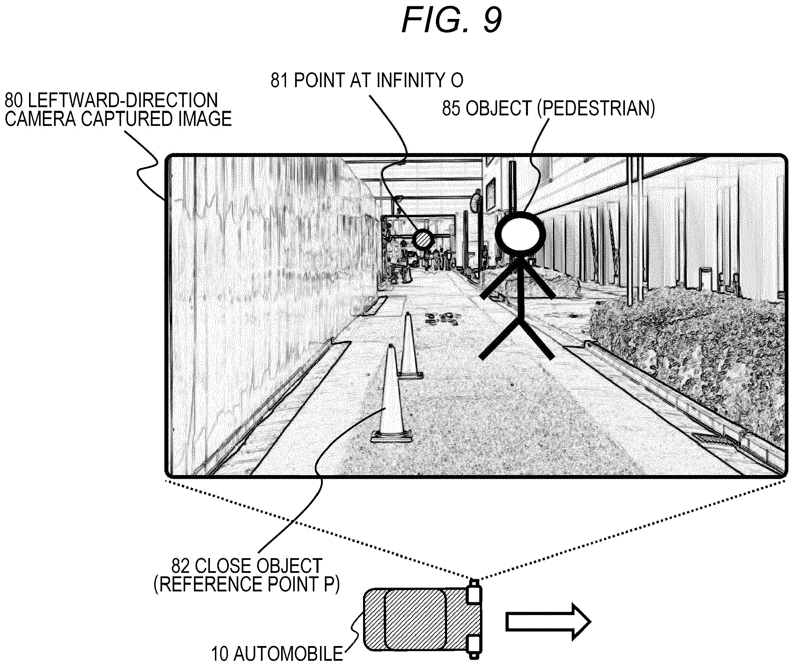

An example of processing in a case where the image illustrated in Fig. 8 is applied and a distance to a pedestrian in this image is obtained is described with reference to Fig. 9.

An image 80 illustrated in Fig. 9 is a captured image of the leftward-direction camera 11L of the automobile 10, that is, a leftward-direction camera captured image 80.

This leftward-direction camera captured image 80 indicates a pedestrian that is walking toward the automobile. It is assumed that this pedestrian is an object 85 serving as a distance calculation target.

The leftward-direction camera captured image 80 indicates a close object 82 to which a distance can be measured by the leftward-direction distance sensor 12L of the automobile 10. This close object 82 is used as a reference point P. Stated another way, a distance from the automobile 10 to the close object 82 is calculated by the leftward-direction distance sensor 12L, and a distance Lref of the reference point P is calculated.

Moreover, a point at infinity O 81 is detected according to the method described above with reference to Fig. 5, 6, or 7.

When the point at infinity O 81 and the close object (the reference point P) 82 to which a distance can be measured are determined, an object distance L to a pedestrian that is walking toward the automobile 10, that is, an object distance L of the object (the pedestrian) 85 serving as a distance calculation target, can be calculated according to (Formula 1) described below that has been described above.

$$L = Lref \times (href/h) = f \times (H/h) \qquad (Formula\ 1)$$

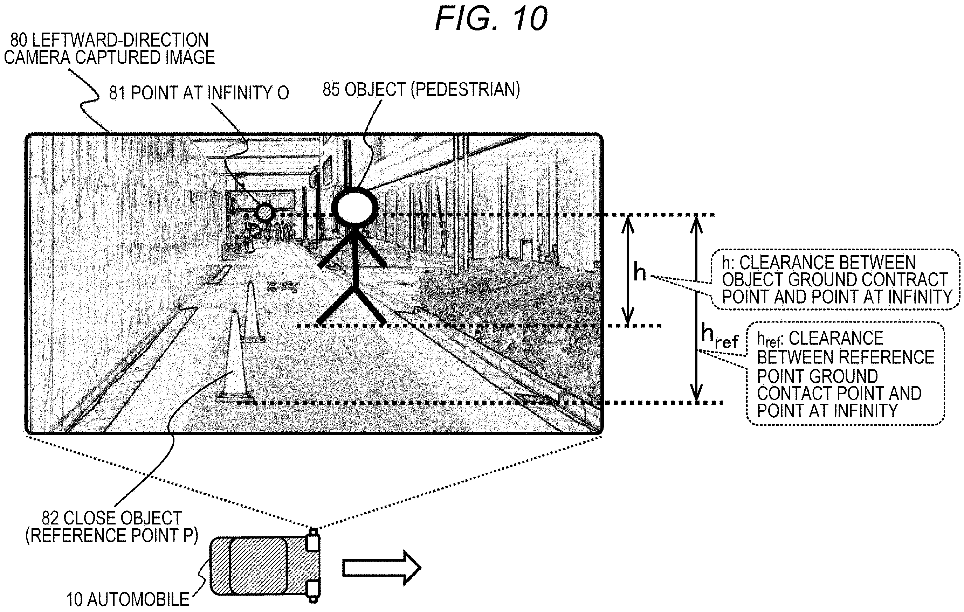

A specific example of processing is described with reference to Fig. 10.

Respective parameters in (Formula 1) described above are described below.

f: Focal length of camera,
H: Installation height (height from reference plane (= road surface)) of camera,
h: Clearance (clearance on image in image upward or downward direction) between object ground contact point (contact point with reference plane (road surface)) and point at infinity on captured image,
Lref: Distance (actual distance) to referent point P (on reference plane (road surface)), and
href: Clearance (clearance on image in image upward or downward direction) between reference point P and point at infinity on captured image.

From among these parameters, the following values are known:

f: Focal length of camera; and
H: Installation height (height from reference plane (= road surface)) of camera.
The distance described below to a reference point P can be obtained by using a distance sensor 12.
Lref: Distance (actual distance) to reference point P (on reference plane (road surface))

The remaining parameters, that is, the parameters described below, are set as illustrated in Fig. 10:

h: Clearance (clearance on image in image upward or downward direction) between object ground contact point (contact point with reference plane (road surface)) and point at infinity on captured image; and
href: Clearance (clearance on image in image upward or downward direction) between reference point P and point at infinity on captured image.

As described above, by detecting, from the image 80, the close object (the reference point P) 82 to which a distance can be measured and the point at infinity O 81, the object distance L to the object (the pedestrian) 85 serving as a distance calculation target can be calculated according to (Formula 1) described below.

$$L = Lref \times (href/h) = f \times (H/h) \qquad (Formula\ 1)$$

Note that, as described above, in order to calculate an object distance by applying (Formula 1) described above, either (Formula 1a) or (Formula 1b) described below can be used.

$$L = Lref \times (href/h) \qquad (Formula\ 1a)$$

$$L = f \times (H/h) \qquad (Formula\ 1b)$$

From among parameters included in the respective formulae described above, the following parameters are known:

f: Focal length of camera; and
H: Installation height (height from reference plane (= road surface)) of camera.

In this setting, in order to calculate an object distance L by using (Formula 1a) described below:

$$L = Lref \times (href/h) \quad (Formula\ 1a),$$

values of the following respective parameters need to be obtained.

Lref: Distance (actual distance) to referent point P (on reference plane (road surface)),
h: Clearance (clearance on image in image upward or downward direction) between object ground contact point (contact point with reference plane (road surface)) and point at infinity on captured image, and
href: Clearance (clearance on image in image upward or downward direction) between reference point P and point at infinity on captured image.

In a case where (Formula 1a) described above is used, first, the close object 82 that is located in a position where a distance can be measured by the leftward-direction distance sensor 12L is selected as the reference point P, and a distance to the reference point P is measured. Therefore, a distance Lref to the reference point P is obtained.
Moreover, the parameters h and href are obtained on the basis of the point at infinity O 81 that has been detected in the processing described with reference to Fig. 5, 6, or 7.
By using these parameters, the object distance can be calculated according to (Formula 1a) described below:

$$L = Lref \times (href/h) \quad (Formula\ 1a).$$

Furthermore, in a case where (Formula 1b) described below is used:

$$L = f \times (H/h) \quad (Formula\ 1b),$$

the parameter h is obtained on the basis of the point at infinity O 81 that has been detected in the processing described with reference to Fig. 5, 6, or 7.
By using this parameter, the object distance can be calculated according to (Formula 1b) described below:

$$L = f \times (H/h) \quad (Formula\ 1b).$$

Note that, in object distance calculation processing using (Formula 1b) described above, a distance to the reference point P does not need to be calculated, and an automobile that does not include any distance sensors can also calculate an object distance on the basis of only a captured image.
Note that, as is understood from the description above, object distance calculation processing is performed on the basis of a captured image of a camera attached to an automobile, and an object distance at a timing of capturing each captured image can be calculated.
Image capturing processing performed by a camera is performed as processing for capturing a moving image of a predetermined frame rate, and an interval of capturing each image is a specified time period. For example, in the case of 60 fps, 60 frames of image per second are captured.
Accordingly, if an object distance is calculated in each image frame unit, a movement distance of an object at each frame interval can be calculated. Stated another way, the movement speed of an object can be calculated.
The information processing device in the automobile 10 can calculate an object distance of each image frame unit, as described above, and can also calculate the movement speed of an object.

[3. Other examples of object distance calculation processing]

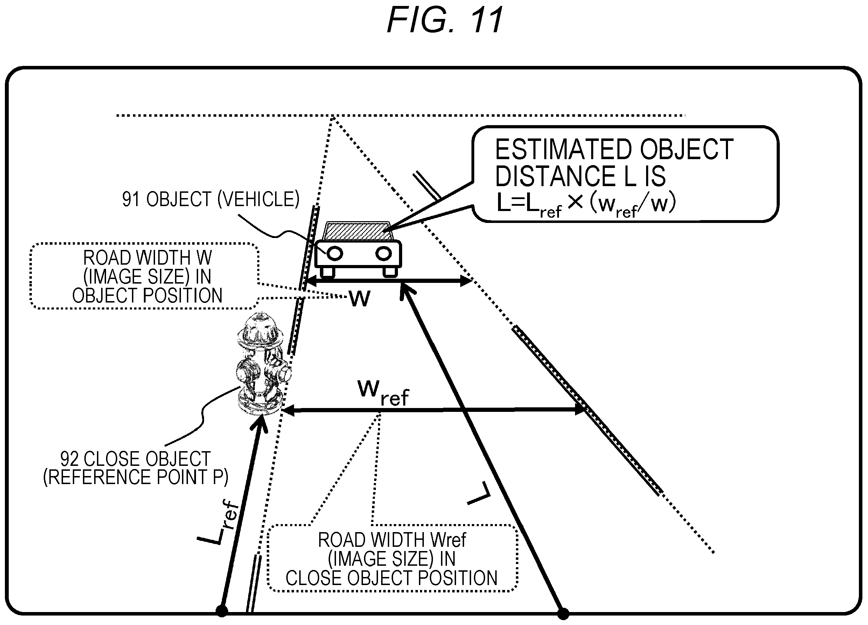

Next, other examples of object distance calculation processing are described with reference to Fig. 11 and the drawings that follow.
The following processing examples are sequentially described.
(Processing Example 1) Example of object distance calculation processing in case where image having certain width, such as road, is included in respective positions of distance calculation target object and reference point object
(Processing Example 2) Example of object distance calculation processing in case where distance calculation target object includes component having known actual size

[3-1. (Processing Example 1) Example of object distance calculation processing in case where image having certain width, such as road, is included in respective positions of distance calculation target object and reference point object]

First, as Processing Example 1, an example of object distance calculation processing in a case where an image having a certain width, such as a road, is included in respective positions of a distance calculation target object and a reference point object is described with reference to Fig. 11.

The image illustrated in Fig. 11 is an image that has been captured by the leftward-direction camera 11L of the automobile 10.

An object (a vehicle) 91 that is approaching on the road has been imaged as a subject.

A distance to this object (the vehicle) 91 is calculated.

Moreover, the image indicates a close object 92 to which a distance can be measured by the leftward-direction distance sensor 12L of the automobile 10.

This close object 92 is used as a reference point P. Stated another way, a distance from the automobile 10 to the close object 92 is measured by the leftward-direction distance sensor 12L and a distance Lref to the reference point P is calculated.

Note that a starting point of an arrow of a line segment indicating the distance Lref or a distance L is illustrated as a painted-out circle in the drawing. However, in a real camera image of central projection, an orientation that is orthogonal to its optical axis is at infinity, and therefore the orientation is not indicated. Stated another way, this is because a camera of central projection that faces a horizontal direction does not form, as an image, a road part just below the camera. The present disclosed drawing is provided to intuitively illustrate a distance from a camera installation position for convenience. This can be understood from a fact that, in Fig. 3 in which a projection relation of central projection is schematically illustrated, when it is assumed that a lens is located at a starting point of an arrow indicating a distance L, the starting point fails to be formed as an image on a projection image plane.

Moreover, the image includes a road, that is, a road on which the object (the vehicle) 91 serving as a distance calculation target object is traveling.

This road is also present in the position of the close object (the reference point P) 92, and it can be estimated that a road width in the real world is constant over almost the entirety of this road.

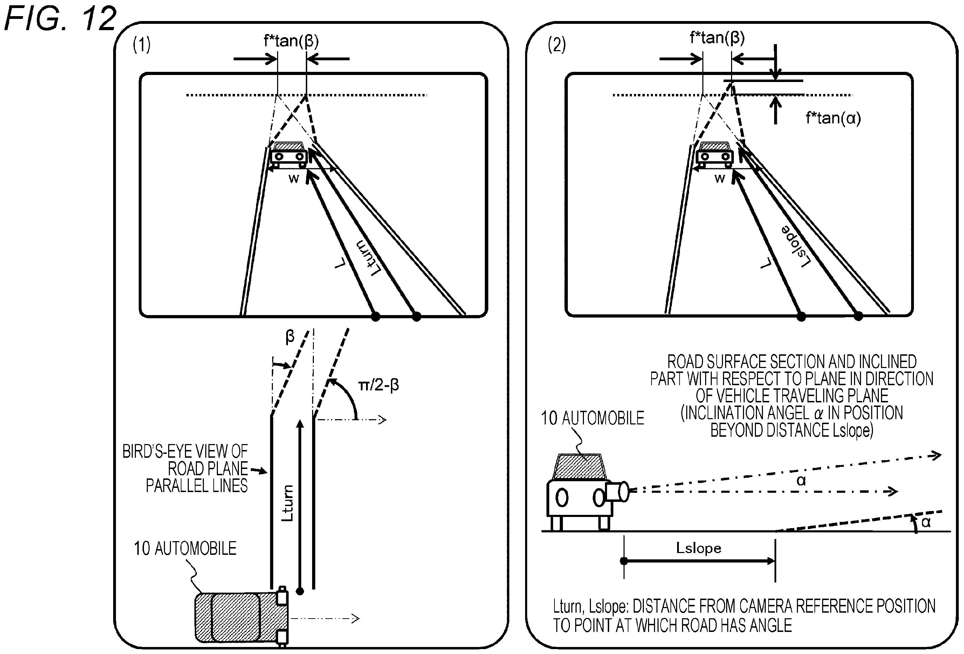

Even if the road width is constant, in a situation where the road is curved or undulates to have ups and downs with respect to a road flat plane of the vehicle, a point at infinity of detected parallel lines shifts according to an orientation of the road, for example, as illustrated in Fig. 12. In arrangement in a screen of an image formed by a camera of a central projection scheme, an orientation of an angle $\beta$ is imaged to shift by a captured image height $f*\tan(\beta)$ with respect to the center of the optical axis of the camera. Therefore, a point at infinity changes among sections to correspond to an orientation of a section in each of the segments that forms each parallel component of the road. In the example illustrated in Fig. 12(1), it is assumed that a line segment is parallel to the optical axis of a camera that has been installed to be perpendicular to a vehicle traveling direction within a distance Lturn from the position of a lens of the camera and the line segment forms an angle $\beta$ with the optical axis of the camera in a position beyond the distance Lturn. Furthermore, Fig. 12(2) illustrates a case where a road surface rises at an inclination $\alpha$ in a position beyond the same distance Lslope.

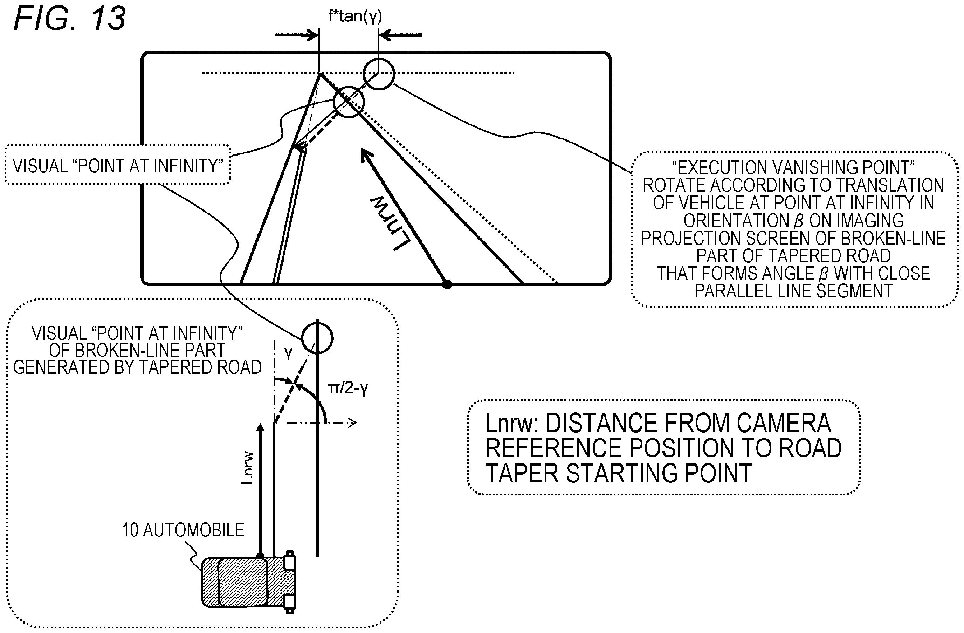

On the other hand, in a case where boundary division lines of a road are not parallel, if an attempt is made to perform determination on the basis of a single frame image, inconvenience is caused. For example, as illustrated in Fig. 13, in a case where a road width is tapered or in a case where a boundary line on one side of a road has been designed in such a way that the road becomes narrow in a forward direction, determination based on a single frame image causes an optical illusion of a point at infinity. Stated another way, the assumption that an intersection point of line segments that have been imaged and detected is a point at infinity of parallel lines does not hold true.

As in these examples illustrated in Figs. 12 and 13, in a case where the width of a road changes, in a case where the road includes an area that is inclined with respect to a flat plane on which the local vehicle is traveling, or in another case, this intersection point is present at a finite length, and therefore the position of a point changes in a translational forward movement of a vehicle. By using this property, a point at infinity that can be applied to calculate a distance and an "apparent" point at infinity in a single frame can be distinguished from each other. Among frames of a captured image of a line segment at a time when a vehicle moves forward and translationally, a point at infinity of parallel line segments of a combination of detected line segments has a behavior that is different from a behavior of an intersection point of line segments drawn as non-parallel line segments. Here, attention is paid to a fact that, in a camera image of central projection, in a case where an orientation with respect to an optical axis in the real space is $\gamma$, a drawing position of a point from the center of an optical axis on a captured screen is $f*\tan(\gamma)$ from a center point of an optical axis on its drawing screen, and a vanishing point at infinity of each of all of the imaged line segments is uniquely determined according to a relationship between each of the imaged line segments and the optical axis of a camera.

A section distance of each section can be estimated from the point of a point at infinity of parallel line segments that are detected in its section, and by performing integration in each section that follows, in principle, a distance to a more distant place can be estimated even for a curved parallel road.

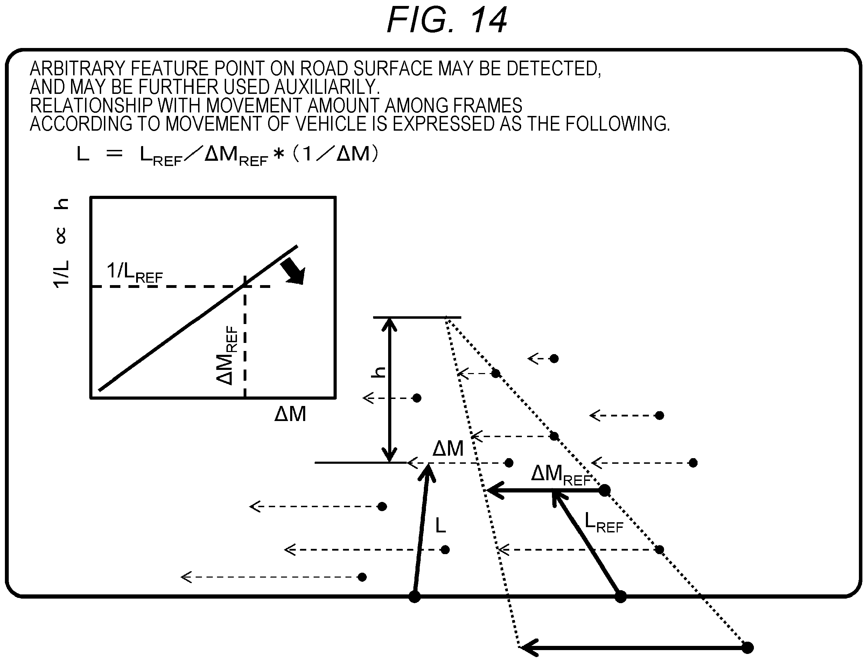

Note that, in calibrating a point at infinity on a road surface or estimating an object distance on the road surface, in a situation where a plurality of road surface features is detected, road surface feature points on an imaging screen move in an inverse direction of a traveling direction in accordance with a translational movement of a vehicle, as illustrated in Fig. 14, and its movement amount LM and a distance L have a relationship of inverse proportion. By only selectively plotting feature points on the road surface, a linear function can be obtained. A distance may be estimated, for example, according to a relational expression that has been fit according to a least-squares method. However, in the case of a road-surface three-dimensional structure, application to calibration fails to be performed in a position that is higher than the road surface of the structure.

However, on an image, the size of a subject increases in a position that is closer to a camera. Accordingly, the following two road width sizes on an image are different from each other:

(a) Image size W of a road width in the position of the object (the vehicle) 91 serving as a distance calculation target object; and
(b) Image size Wref of a road width in the position of the close object (the reference point P) 92.

The size on an image of an object having the same size in the real world is in inverse proportion to a distance from a camera to a subject. Stated another way, as a distance from a camera to a subject increases, a size on an image decreases.

For the close object (the reference point P) 92 illustrated in Fig. 11, a distance from the automobile 10 is measured by the leftward-direction distance sensor 12L. Stated another way, the following is established:
Reference point P distance = Lref.

Furthermore, a road width on an image in an image lateral direction (a horizontal direction) in the position of this close object (the reference point P) 92 is Wref. This road size Wref can be obtained from the image.

Moreover, a road width on the image in the image lateral direction (the horizontal direction) in the position of the object (the vehicle) 91 serving as a distance calculation target object is W. This road size W can be obtained from the image.

Accordingly, a distance L from the position of a camera (= the position of the automobile 10) to the object (the vehicle) 91 serving as a distance calculation target object can be calculated according to (Formula 2) described below.

$$L = Lref \times (Wref/W) \quad \text{(Formula 2)}$$

In this formula,

Lref: Distance (actual distance) to reference point P (on reference plane (road surface)),
Wref: Width (length on image) of object (such as road) in image lateral direction (horizontal direction) of reference point P (on reference plane (road surface)), and
W: Width (length on image) of object (such as road) in image lateral direction (horizontal direction) of distance calculation target object (on reference plane (road surface)).

[3-2. (Processing Example 2) Example of object distance calculation processing in case where distance calculation target object includes component having known actual size]

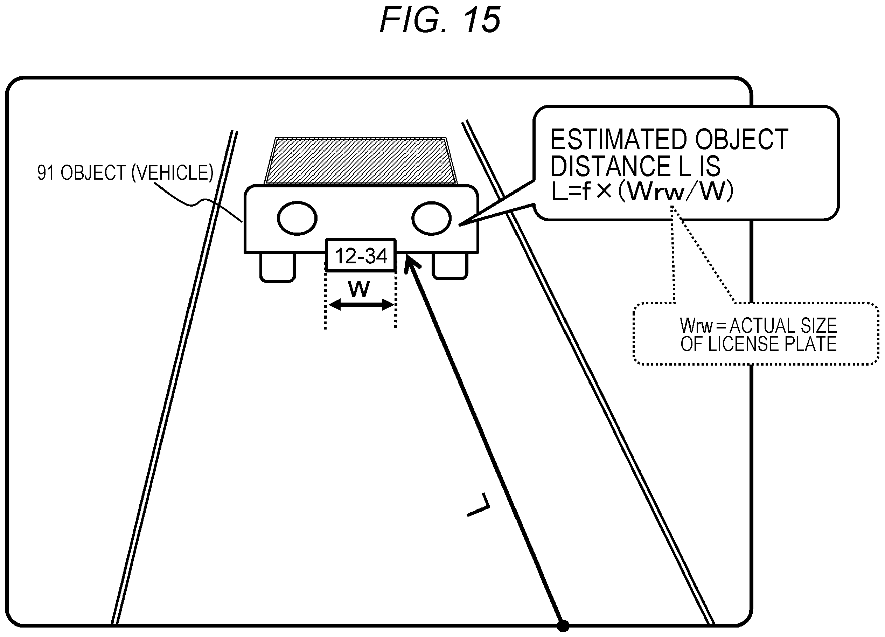

Next, as Processing Example 2, an example of object distance calculation processing in a case where a distance calculation target object includes a component having a known actual size is described with reference to Fig. 15.

The image illustrated in Fig. 15 is an image that has been captured by the leftward-direction camera 11L of the automobile 10.

An object (a vehicle) 91 that is approaching on the road has been imaged as a subject.

A distance to this object (the vehicle) 91 is calculated.

The object (the vehicle) 91 serving as a distance calculation target object includes an image of a license plate.

The size of a license plate of an automobile conforms to standards, and is the same in all of the general passenger cars.

Stated another way, the actual size of the license plate is known.

It is assumed that this actual size (a width) that is a known size of the license plate is Wrw.

Furthermore, it is assumed that an image size (a width) of the license plate included in a captured image is W.

Moreover, it is assumed that a focal length of a camera is f. This f is known.

In this case, a distance L from the position of a camera (= the position of the automobile 10) to the object (the vehicle) 91 serving as a distance calculation target object can be calculated according to (Formula 3) described below.

$$L = f \times (Wrw/W) \qquad (Formula\ 3)$$

In this formula,

f: Focal length of camera,
Wrw: Actual size of component having known actual size that is included in image of distance calculation target object, and
W: Image size of component having known actual size that is included in image of distance calculation target object.

In object distance calculation processing that has been described with reference to Figs. 11 and 15, the processing described above for detecting the position of a point at infinity from an image is omitted.
Stated another way, even in a case where a point at infinity fails to be detected from an image, an object distance can be calculated.
Furthermore, in the processing described with reference to Fig. 15, a distance to a reference point P does not need to be calculated either, and an automobile that does not include any distance sensors can also calculate an object distance.

[4. Sequence of processing performed by information processing device]

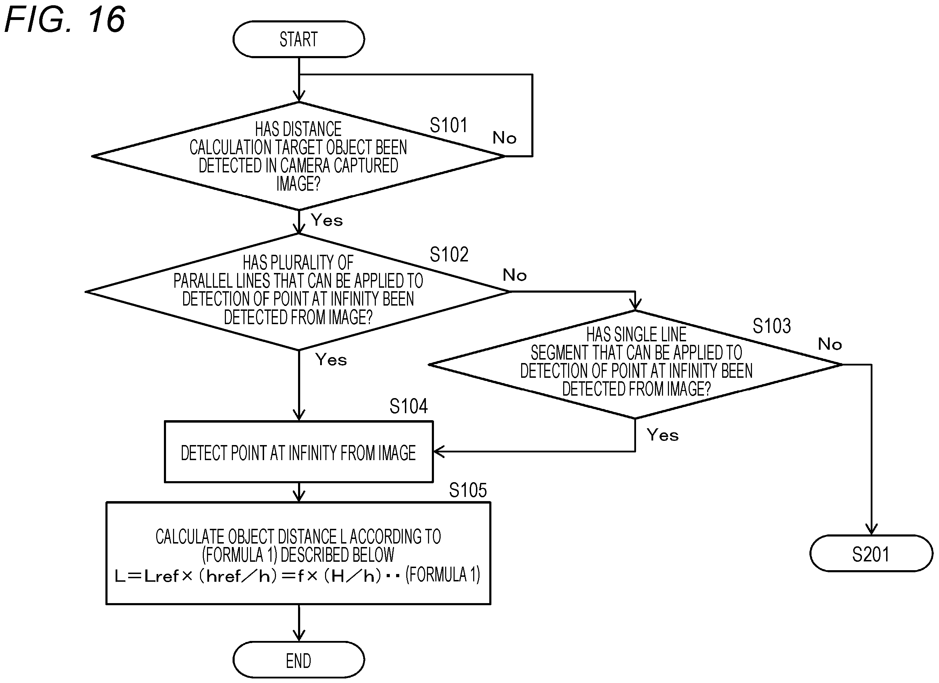

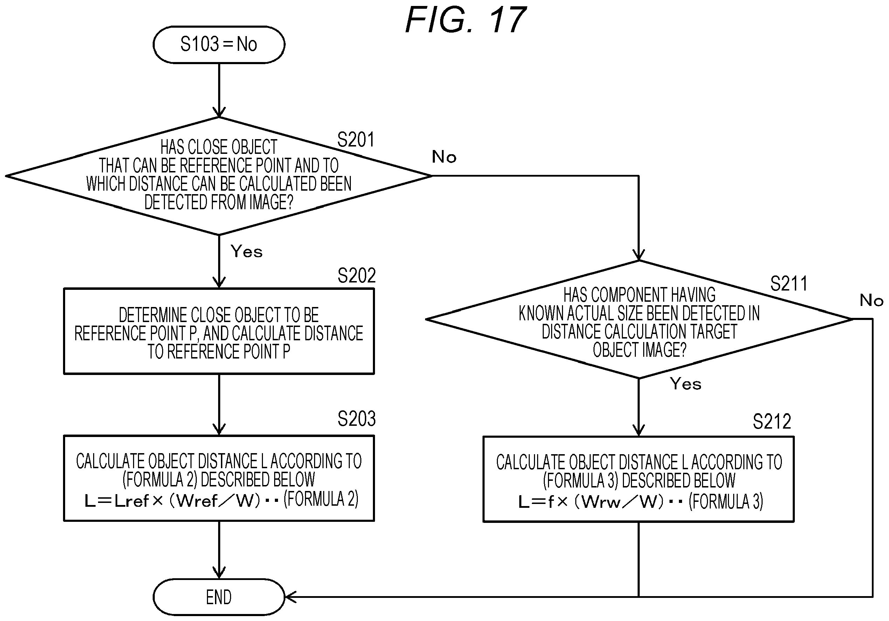

Next, a sequence of processing performed by the information processing device in the automobile 10 is described with reference to the flowcharts illustrated in Figs. 16 and 17.
Note that processing according to the flowcharts illustrated in Figs. 16 and 17 can be performed, for example, according to a program stored in a storage of the information processing device.
The information processing device includes hardware having a program execution function, such as a CPU.
The processes of respective steps in the flowcharts are described below.

(Step S101)

First, in step S101, it is determined whether or not a distance calculation target object has been detected in a camera captured image.
Note that a camera in this case is either the leftward-direction camera 11L or the rightward-direction camera 11R.
Furthermore, the distance calculation target object may be any object that can be an obstacle against the movement of the automobile 10, such as a vehicle, a pedestrian, a cuardrail, or a side wall, or setting may be performed in such a way that only an object that moves is selected.

(Step S102)

Next, in step S102, it is determined whether or not a plurality of parallel lines (parallel lines in the real world) that can be applied to the detection of a point at infinity has been detected from the camera captured image.
These parallel lines are lines that extend in a direction away from a camera side. Stated another way, these parallel lines are lines, such as the parallel lines a to d or 61a to 61d, that have been described above with reference to Fig. 5.
In a case where it has been determined that a plurality of parallel lines (parallel lines in the real world) that can be applied to the detection of a point at infinity has been detected from the camera captured image, the processing moves on to step S104.
In contrast, in a case where it has been determined that a plurality of parallel lines (parallel lines in the real world) that can be applied to the detection of a point at infinity fails to be detected from the camera captured image, the processing moves on to step S103.

(Step S103)

In step S102, in a case where it has been determined that a plurality of parallel lines (parallel lines in the real world) that can be applied to the detection of a point at infinity fails to be detected from the camera captured image, the processing moves on to step S103.
In step S103, it is determined whether or not a single line segment that can be applied to the detection of a point at infinity has been detected from the camera captured image.
This line segment is also a line that extends in a direction away from a camera side. Stated another way, this line segment is a line, such as the individual detected line 71, that has been described above with reference to Fig. 7.

In a case where it has been determined that a single line segment that can be applied to the detection of a point at infinity has been detected from the camera captured image, the processing moves on to step S104.

In contrast, in a case where it has been determined that a single line segment that can be applied to the detection of a point at infinity fails to be detected from the camera captured image, the processing moves on to step S201.

(Step S104)

In step S102, in a case where it has been determined that a plurality of parallel lines (parallel lines in the real world) that can be applied to the detection of a point at infinity has been detected from the camera captured image, or in step S103, in a case where it has been determined that a single line segment that can be applied to the detection of a point at infinity has been detected from the camera captured image, the processing moves on to step S104.

In step S104, a point at infinity is detected from the camera captured image.

In step S102, in a case where a plurality of parallel lines (parallel lines in the real world) that can be applied to the detection of a point at infinity has been detected from the camera captured image, the plurality of parallel lines is extended, and an intersection point of the extended lines is detected, as described above with reference to Fig. 5. This intersection point is determined to be a point at infinity.

Furthermore, in step S103, in a case where a single line segment that can be applied to the detection of a point at infinity has been detected from the camera captured image, a plurality of lines that is output in a case where line segments that are included in a plurality of captured image frames during a predetermined period have been output on a single image are extended, and an intersection point of the extended lines is detected, as described above with reference to Fig. 7. This intersection point is determined to be a point at infinity.

(Step S105)

In step S104, when the detection of a point at infinity has been finished, the processing moves on to step S105.

In step S105, an object distance is calculated according to (Formula 1) described below.

$$L = Lref \times (href/h) = f \times (H/h) \qquad (Formula\ 1)$$

In this formula,

f: Focal length of camera,

H: Installation height (height from reference plane (= road surface)) of camera,

h: Clearance (clearance on image in image upward or downward direction) between object ground contact point (contact point with reference plane (road surface)) and point at infinity on captured image,

Lref: Distance (actual distance) to referent point P (on reference plane (road surface)), and

href: Clearance (clearance on image in image upward or downward direction) between reference point P and point at infinity on captured image.

Note that, in order to calculate an object distance by applying (Formula 1) described above, either (Formula 1a) or (Formula 1b) described below can be used.

$$L = Lref \times (href/h) \qquad (Formula\ 1a)$$

$$L = f \times (H/h) \qquad (Formula\ 1b)$$

From among parameters included in the respective formulae described above, the following parameters are known:

f: Focal length of camera; and

H: Installation height (height from reference plane (= road surface)) of camera.

In this setting, in a case where an object distance L is calculated by using (Formula 1a) described below:

$$L = Lref \times (href/h) \quad (Formula\ 1a),$$

the parameters described below need to be obtained:

Lref: Distance (actual distance) to referent point P (on reference plane (road surface));
h: Clearance (clearance on image in image upward or downward direction) between object ground contact point (contact point with reference plane (road surface)) and point at infinity on captured image; and
href: Clearance (clearance on image in image upward or downward direction) between reference point P and point at infinity on captured image.

In a case where (Formula 1a) described above is used, first, a close object that is located in a position where a distance can be measured by a distance sensor 12 is selected as a reference point P, a distance to the reference point P is measured, and a distance Lref to the reference point P is obtained.

Moreover, the parameters h and href are obtained on the basis of the point at infinity that has been detected in step S104.

By using these parameters, the object distance can be calculated according to (Formula 1a) described below:

$$L = Lref \times (href/h) \quad (Formula\ 1a).$$

Furthermore, in a case where (Formula 1b) described below is used:

$$L = f \times (H/h) \quad (Formula\ 1b),$$

the parameter h is obtained on the basis of the point at infinity that has been detected in step S104.

By using this parameter, the object distance can be calculated according to (Formula 1b) described below:

$$L = f \times (H/h) \quad (Formula\ 1b).$$

Note that, in object distance calculation processing using (Formula 1b) described above, a distance to the reference point P does not need to be calculated, and an automobile that does not include any distance sensors can also calculate an object distance on the basis of only a captured image.

(Step S201)

In step S102, in a case where it has been determined that a plurality of parallel lines (parallel lines in the real world) that can be applied to the detection of a point at infinity fails to be detected from the camera captured image, and

in step S103, in a case where it has been determined that a single line segment that can be applied to the detection of a point at infinity fails to be detected from the camera captured image, the processing moves on to step S201.

In step S201, it is determined whether or not a close object that can be a reference point and to which a distance can be calculated has been detected from the image.

In a case where the close object has been detected, the processing moves on to step S202.

In a case where the close object fails to be detected, the processing moves on to step S211.

(Step S202)

In step S201, in a case where it has been determined that a close object that can be a reference point and to which a distance can be calculated has been detected from the image, the processing moves on to step S202.

In step S202, the close object is determined to be a reference point P, and a distance to the reference point P is calculated.

The distance is calculated by either of the distance sensors 12L and 12R.

(Step S203)

Next, an object distance L is calculated according to (Formula 2) described below.

$$L = Lref \times (Wref/W) \quad (Formula\ 2)$$

In this formula,

Lref: Distance (actual distance) to reference point P (on reference plane (road surface)),
Wref: Width (length on image) of object (such as road) in image lateral direction (horizontal direction) of reference point P (on reference plane (road surface)), and
W: Width (length on image) of object (such as road) in image lateral direction (horizontal direction) of distance calculation target object (on reference plane (road surface)).

Object distance calculation processing using (Formula 2) described above corresponds to the processing described above with reference to Fig. 11.

(Step S211)

In contrast, in step S201, in a case where it has been determined that a close object that can be a reference point and to which a distance can be calculated fails to be detected from the image, the processing moves on to step S211.
In step S211, it is determined whether or not a component having a known actual size, such as a license plate, is included an image of the distance calculation target object.
In a case where a component having a known actual size is included, the processing moves on to step S212.
In a case where a component having a known actual size is not included, the processing is terminated.

(Step S212)

In step S211, in a case where it has been determined that a component having a known actual size, such as a license plate, is included an image of the distance calculation target object, the processing moves on to step S212.
In step S212, an object distance L is calculated according to (Formula 3) described below.

$$L = f \times (Wrw/W) \quad (Formula\ 3)$$

In this formula,

f: Focal length of camera,
Wrw: Actual size of component having known actual size that is included in image of distance calculation target object, and
W: Image size of component having known actual size that is included in image of distance calculation target object.

Object distance calculation processing using (Formula 3) described above corresponds to the processing described above with reference to Fig. 15.

[5. Example of configuration of movement device]

Next, an example of the configuration of a movement device, such as the automobile 10, that performs processing according to the present disclosure is described with reference to Fig. 16.
Fig. 16 is a block diagram illustrating a schematic functional configuration example of a vehicle control system 100 that is one example of a control system of the movement device, such as the automobile 10, that performs the processing described above.
Note that, hereinafter, in a case where a vehicle that is provided with the vehicle control system 100 is distinguished from another vehicle, the vehicle that is provided with the vehicle control system 100 is referred to as the local car or the local vehicle.
The vehicle control system 100 includes an input unit 101, a data acquisition unit 102, a communication unit 103, an in-vehicle device 104, an output controller 105, an output unit 106, a drive system controller 107, a drive system 108, a body system controller 109, a body system 110, a storage 111, and an automatic driving controller 112. The input unit 101, the data acquisition unit 102, the communication unit 103, the output controller 105, the drive system controller 107, the body system controller 109, the storage 111, and the automatic driving controller 112 are mutually connected via a communication network 121. The communication network 121 includes, for example, an on-vehicle communication network conforming to an arbitrary standard, such as a controller area network (CAN), a local interconnect network (LIN), a local area network (LAN), or FlexRay (registered trademark), a bus, or the like. Note that, in some cases, respective units of the vehicle control system 100 are directly connected without the communication network 121.

Note that, hereinafter, in a case where the respective units of the vehicle control system 100 perform communication via the communication network 121, the description of the communication network 121 is omitted. For example, in a case where the input unit 101 and the automatic driving controller 112 perform communication via the communication network 121, it is simply described that the input unit 101 and the automatic driving controller 112 perform communication.

The input unit 101 includes a device that a passenger uses to input various types of data, instructions, or the like. For example, the input unit 101 includes an operation device such as a touch panel, a button, a microphone, a switch, or a lever, an operation device on which an input operation can be performed by using a method other than a manual operation, such as sound or a gesture, and the like. Furthermore, for example, the input unit 101 may be a remote control device that uses infrared rays or other radio waves, or an external connection device, such as a mobile device or a wearable device, that corresponds to an operation of the vehicle control system 100. The input unit 101 generates an input signal on the basis of data, an instruction, or the like that has been input by a passenger, and supplies the input signal to the respective units of the vehicle control system 100.

The data acquisition unit 102 includes a variety of sensors or the like that acquire data to be used in processing performed by the vehicle control system 100, and supplies the acquired data to the respective units of the vehicle control system 100.

For example, the data acquisition unit 102 includes a variety of sensors that detect a state of the local car, or the like. Specifically, for example, the data acquisition unit 102 includes a gyro sensor, an acceleration sensor, an inertial measurement unit (IMU), a sensor that detects an amount of an operation performed on an accelerator pedal, an amount of an operation performed on a brake pedal, a steering angle of a steering wheel, engine speed, the rotational speed of a motor, the rotational speed of a wheel, or the like, and other sensors.

Furthermore, for example, the data acquisition unit 102 includes a variety of sensors that detect information relating to the outside of the local car. Specifically, for example, the data acquisition unit 102 includes an imaging device such as a time-of-flight (ToF) camera, a stereo camera, a monocular camera, an infrared camera, or another camera. Furthermore, for example, the data acquisition unit 102 includes an environment sensor that detects weather, meteorological phenomena, or the like, and a peripheral information detection sensor that detects an object around the local car. The environment sensor includes, for example, a raindrop sensor, a fog sensor, a sunshine sensor, a snow sensor, or the like. The peripheral information detection sensor includes, for example, an ultrasonic sensor, a radar, a light detection and ranging or laser imaging detection and ranging (LiDAR), a sonar, or the like.

Moreover, for example, the data acquisition unit 102 includes a variety of sensors that detect a current position of the local car. Specifically, for example, the data acquisition unit 102 includes a global navigation satellite system (GNSS) receiver that receives a GNSS signal from a GNSS satellite, or the like.

Furthermore, for example, the data acquisition unit 102 includes a variety of sensors that detect in-vehicle information. Specifically, for example, the data acquisition unit 102 includes an imaging device that images a driver, a biosensor that detects biological information of the driver, a microphone that collects sound in a vehicle cabin, and the like. The biosensor is provided, for example, on a seat surface, a steering wheel, or the like, and detects biological information relating to a passenger who is seated on a seat or a driver who is holding the steering wheel.

The communication unit 103 performs communication with the in-vehicle device 104, and a variety of outside-vehicle devices, a server, a base station, and the like, and transmits data supplied from the respective units of the vehicle control system 100 or supplies received data to the respective units of the vehicle control system 100. Note that a communication protocol supported by the communication unit 103 is not particularly limited, and the communication unit 103 can also support plural types of communication protocols.

For example, the communication unit 103 performs wireless communication with the in-vehicle device 104 by using a wireless LAN, Bluetooth (registered trademark), near field communication (NFC), a wireless USB (WUSB), or the like. Furthermore, for example, the communication unit 103 performs wired communication with the in-vehicle device 104 via a not-illustrated connection terminal (and a cable if necessary), by using a universal serial bus (USB), a high-definition multimedia interface (HDMI) (registered trademark), a mobile high-definition link (MHL), or the like.

Moreover, for example, the communication unit 103 performs communication with equipment (for example, an application server or a control server) that is present on an external network (for example, the Internet, a cloud network, or a company-specific network) via the base station or an access point. Furthermore, for example, the communication unit 103 performs communication with a terminal that is present near the local car (for example, a terminal of a pedestrian or a store, or a machine type communication (MTC) terminal) by using a peer to peer (P2P) technology. Moreover, for example, the communication unit 103 performs V2X communication such as vehicle to vehicle communication, vehicle to infrastructure communication, vehicle to home communication, or vehicle to pedestrian communication. Furthermore, for example, the communication unit 103 includes a beacon receiver, receives radio waves or electromagnetic waves that have been transmitted from a wireless station that is provided on a road, or the like, and acquires information relating to a current position, a traffic jam, traffic regulations, a required time, or the like.

The in-vehicle device 104 includes, for example, a mobile device or a wearable device that is possessed by a passenger, an information device that is carried in or attached to the local car, a navigation device that searches for a route to an arbitrary destination, and the like.

The output controller 105 controls an output of various types of information to a passenger of the local car or the outside of the vehicle. For example, the output controller 105 controls an output of visual information (for example, image data) and auditory information (for example, sound data) from the output unit 106 by generating an output signal including at least one of the visual information or the auditory information and supplying the output signal to the output unit 106. Specifically, for example, the output controller 105 combines pieces of image data that have been captured by imaging devices that are different from each other in the data acquisition unit 102, generates an overhead image, a panoramic image, or the like, and supplies an output signal including the generated image to the output unit 106. Furthermore, for example, the output controller 105 generates sound data including warning sound, a warning message, or the like against danger such as collision, contact, or entry into a danger zone, and supplies, to the output unit 106, an output signal including the generated sound data.

The output unit 106 includes a device that can output the visual information or the auditory information to a passenger of the local car or the outside of the vehicle. For example, the output unit 106 includes a display device, an instrument panel, an audio speaker, a headphone, a wearable device, such as an eyeglasses type display, that a passenger wears, a projector, a lamp, or the like. The display device included in the output unit 106 may be a device including a normal display, or may be, for example, a device that displays auditory information in a field of view of a driver, such as a head-up display, a transmission type display, or a device having an augmented reality (AR) display function.

The drive system controller 107 controls the drive system 108 by generating various control signals and supplying the various control signals to the drive system 108. Furthermore, the drive system controller 107 supplies a control signal to respective units other than the drive system 108, as needed, and gives notice or the like of a control state of the drive system 108.

The drive system 108 includes a variety of devices that relate to a drive system of the local car. For example, the drive system 108 includes a drive force generation device that generates a drive force, such as an internal combustion engine or a drive motor, a drive force transmission mechanism that transmits a drive force to wheels, a steering mechanism that adjusts a steering angle, a braking device that generates a braking force, an antilock brake system (ABS), an electronic stability control (ESC), an electric power steering device, and the like.

The body system controller 109 controls the body system 110 by generating various control signals and supplying the various control signals to the body system 110. Furthermore, the body system controller 109 supplies a control signal to respective units other than the body system 110, as needed, and gives notice or the like of a control state of the body system 110.

The body system 110 includes a variety of devices of a body system equipped in a vehicle body. For example, the body system 110 includes a keyless entry system, a smart key system, a power window device, a power seat, a steering wheel, an air conditioner, a variety of lamps (for example, a headlamp, a back lamp, a brake lamp, a turn signal, a fog lamp, and the like), or the like.

The storage 111 includes, for example, a read only memory (ROM), a random access memory (RAM), a magnetic storage device such as a hard disc drive (HDD), a semiconductor storage device, an optical storage device, a magneto-optical storage device, and the like. The storage 111 stores various programs, data, or the like that are used by the respective units of the vehicle control system 100. For example, the storage 111 stores map data such as a three-dimensional high-precision map, e.g., a dynamic map, a global map that has a lower precision and covers a wider area than the high-precision map, or a local map including information relating to the surroundings of the local car.

The automatic driving controller 112 performs control relating to automatic driving such as autonomous traveling or driving support. Specifically, for example, the automatic driving controller 112 performs cooperative control aiming at implementing a function of an advanced driver assistance system (ADAS) including collision avoidance or impact mitigation of the local car, follow-up traveling based on a distance between vehicles, vehicle speed maintaining traveling, a warning against the collision the local car, a warning against the lane departure of the local car, or the like. Furthermore, for example, the automatic driving controller 112 performs cooperative control aiming at automatic driving or the like for autonomous traveling that is independent of an operation performed by a driver. The automatic driving controller 112 includes a detection unit 131, a self-position estimation unit 132, a situation analyzer 133, a planning unit 134, and a motion controller 135.

The detection unit 131 detects various types of information required to control automatic driving. The detection unit 131 includes an outside-vehicle information detection unit 141, an in-vehicle information detection unit 142, and a vehicle state detection unit 143.

The outside-vehicle information detection unit 141 performs processing for detecting information relating to the outside of the local car on the basis of data or a signal from each of the units of the vehicle control system 100. For example, the outside-vehicle information detection unit 141 performs processing for detecting, recognizing, and tracking an object around the local car, and processing for detecting a distance to the object. Examples of an object to be detected include a vehicle, a person, an obstacle, a structure, a road, a traffic light, a traffic sign, a road sign, and the like. Furthermore, for example, the outside-vehicle information detection unit 141 performs processing for detecting a surrounding environment of the local car. Examples of a surrounding environment to be detected include weather, air temperature, humidity, brightness, a road surface state, and the like. The outside-vehicle information detection unit 141 supplies data indicating a result of detection processing to the self-position estimation unit 132, a map analyzer 151, a traffic rule recognizer 152, and a situation recognizer 153 of the situation analyzer 133, an emergency avoidance unit 171 of the motion controller 135, and the like.

The in-vehicle information detection unit 142 performs processing for detecting in-vehicle information on the basis of data or a signal from each of the units of the vehicle control system 100. For example, the in-vehicle information detection unit 142 performs processing for authenticating and recognizing a driver, processing for detecting the driver's state, processing for detecting a passenger, processing for detecting an in-vehicle environment, and the like. Examples of a driver's state to be detected include a physical condition, a degree of awakening, a degree of concentration, a degree of fatigue, a direction of a line-of-sight, and the like. Examples of an in-vehicle environment to be detected include air temperature, humidity, brightness, an odor, and the like. The in-vehicle information detection unit 142 supplies data indicating a result of detection processing to the situation recognizer 153 of the situation analyzer 133, the emergency avoidance unit 171 of the motion controller 135, and the like.

The vehicle state detection unit 143 performs processing for detecting a state of the local car on the basis of data or a signal from each of the units of the vehicle control system 100. Examples of a state of the local car that serves as a target to be detected include speed, acceleration, a steering angle, the presence or absence and content of abnormality, a state of a driving operation, a position and an inclination of a power seat, a state of door lock, a state of another on-vehicle device, and the like. The vehicle state detection unit 143 supplies data indicating a result of detection processing to the situation recognizer 153 of the situation analyzer 133, the emergency avoidance unit 171 of the motion controller 135, and the like.

The self-position estimation unit 132 performs processing for estimating a position, an orientation, and the like of the local car on the basis of data or a signal from each of the units of the vehicle control system 100, e.g., the outside-vehicle information detection unit 141, the situation recognizer 153 of the situation analyzer 133, and the like. Furthermore, the self-position estimation unit 132 generates a local map used to estimate a self-position (hereinafter referred to as a self-position estimation map), as needed. It is assumed, for example, that the self-position estimation map is a high-precision map using a technology such as simultaneous localization and mapping (SLAM). The self-position estimation unit 132 supplies data indicating a result of estimation processing to the map analyzer 151, the traffic rule recognizer 152, and the situation recognizer 153 of the situation analyzer 133, and the like. Furthermore, the self-position estimation unit 132 stores the self-position estimation map in the storage 111.

The situation analyzer 133 performs processing for analyzing situations of the local car and the surroundings. The situation analyzer 133 includes the map analyzer 151, the traffic rule recognizer 152, the situation recognizer 153, and the situation prediction unit 154.

The map analyzer 151 performs processing for analyzing various maps stored in the storage 111 by using data or a signal from each of the units of the vehicle control system 100, e.g., the self-position estimation unit 132, the outside-vehicle information detection unit 141, and the like, as needed, and constructs a map including information required for automatic driving processing. The map analyzer 151 supplies the constructed map to the traffic rule recognizer 152, the situation recognizer 153, the situation prediction unit 154, a route planning unit 161, an action planning unit 162, and a motion planning unit 163 of the planning unit 134, and the like.

The traffic rule recognizer 152 performs processing for recognizing a traffic rule in the surroundings of the local car on the basis of data or a signal from each of the units of the vehicle control system 100, e.g., the self-position estimation unit 132, the outside-vehicle information detection unit 141, the map analyzer 151, and the like. By performing this recognition processing, for example, a position and a state of a traffic light around the local car, the content of traffic regulations around the local car, a travelable traffic lane, and the like are recognized. The traffic rule recognizer 152 supplies data indicating a result of recognition processing to the situation prediction unit 154 or the like.

The situation recognizer 153 performs processing for recognizing a situation relating to the local car on the basis of data or a signal from each of the units of the vehicle control system 100, e.g., the self-position estimation unit 132, the outside-vehicle information detection unit 141, the in-vehicle information detection unit 142, the vehicle state detection unit 143, the map analyzer 151, and the like. For example, the situation recognizer 153 performs processing for recognizing a situation of the local car, a situation of the surroundings of the local car, a situation of a driver of the local car, and the like. Furthermore, the situation recognizer 153 generates a local map used to recognize the situation of the surroundings of the local car (hereinafter referred to as a situation recognition map), as needed. It is assumed, for example, that the situation recognition map is an occupancy grid map.

Examples of a situation of the local car that serves as a target to be recognized include a position, an orientation, a movement (for example, speed, acceleration, a movement direction, or the like) of the local car, the presence or absence and content of an abnormality, and the like. Examples of a situation of the surroundings of the local car that serves as a target to be recognized include a type and a position of a surrounding static object, a type, a position, and a movement (for example, speed, acceleration, a movement direction, and the like) of a surrounding moving object, a configuration and a road surface state of a surrounding road, weather, air temperature, humidity, and brightness of the surroundings, and the like. Examples of a driver's state serving as a target to be recognized include a physical condition, a degree of awakening, a degree of concentration, a degree of fatigue, a movement of a line-of-sight, a driving operation, and the like.

The situation recognizer 153 supplies data indicating a result of recognition processing (including the situation recognition map, as needed) to the self-position estimation unit 132, the situation prediction unit 154, and the like. Furthermore, the situation recognizer 153 stores the situation recognition map in the storage 111.

The situation prediction unit 154 performs processing for predicting a situation relating to the local car on the basis of data or a signal from each of the units of the vehicle control system 100, e.g., the map analyzer 151, the traffic rule recognizer 152, the situation recognizer 153, and the like. For example, the situation prediction unit 154 performs processing for predicting a situation of the local car, a situation of the surroundings of the local car, a situation of a driver, and the like.

Examples of a situation of the local car that serves as a target to be predicted include a behavior of the local car, the occurrence of an abnormality, a travelable distance, and the like. Examples of a situation of the surroundings of the local car that serves as a target to be predicted include a behavior of a moving object around the local car, a change in a state of a traffic light, a change in environment such as weather, and the like. Examples of a situation of a driver that serves as a target to be predicted include a behavior, a physical condition, and the like of the driver.

The situation prediction unit 154 supplies data indicating a result of prediction processing together with data from the traffic rule recognizer 152 and the situation recognizer 153, to the route planning unit 161, the action planning unit 162, and the motion planning unit 163 of the planning unit 134, and the like.

The route planning unit 161 plans a route to a destination on the basis of data or a signal from each of the units of the vehicle control system 100, e.g., the map analyzer 151, the situation prediction unit 154, and the like. For example, the route planning unit 161 sets a route from a current position to a specified destination on the basis of a global map. Furthermore, for example, the route planning unit 161 appropriately changes a route on the basis of a traffic jam, an accident, traffic regulations, a situation of a construction work or the like, a physical condition of a driver, and the like. The route planning unit 161 supplies data indicating the planned route to the action planning unit 162 or the like.

The action planning unit 162 plans an action of the local car for safely traveling on the route planned by the route planning unit 161 within a planned time, on the basis of data or a signal from each of the units of the vehicle control system 100, e.g., the map analyzer 151, the situation prediction unit 154, and the like. For example, the action planning unit 162 plans a start, a stop, a traveling direction (for example, moving forward, moving backward, turning left, turning right, changing directions, and the like), a traveling lane, traveling speed, passing, and the like. The action planning unit 162 supplies data indicating the planned action of the local car to the motion planning unit 163 or the like.

The motion planning unit 163 plans a motion of the local car for achieving the action planned by the action planning unit 162, on the basis of data or a signal from each of the units of the vehicle control system 100, e.g., the map analyzer 151, the situation prediction unit 154, and the like. For example, the motion planning unit 163 plans acceleration, deceleration, a traveling track, and the like. The motion planning unit 163 supplies data indicating the planned motion of the local car to an acceleration or deceleration controller 172 and a direction controller 173 of the motion controller 135, and the like.

The motion controller 135 controls a motion of the local car. The motion controller 135 includes the emergency avoidance unit 171, the acceleration or deceleration controller 172, and the direction controller 173.

The emergency avoidance unit 171 performs processing for detecting emergency, such as collision, contact, entry to a danger zone, an abnormality in a driver, or an abnormality in a vehicle, on the basis of detection results of the outside-vehicle information detection unit 141, the in-vehicle information detection unit 142, and the vehicle state detection unit 143. In a case where the occurrence of emergency has been detected, the emergency avoidance unit 171 plans a motion of the local car for the avoidance of emergency, such as a sudden stop or a sudden turn. The emergency avoidance unit 171 supplies data indicating the planned motion of the local car to the acceleration or deceleration controller 172, the direction controller 173, and the like.

The acceleration or deceleration controller 172 controls acceleration or deceleration to achieve the motion of the local car that has been planned by the motion planning unit 163 or the emergency avoidance unit 171. For example, the acceleration or deceleration controller 172 calculates a control target value of a drive force generator or a braking device to achieve acceleration, deceleration, or a sudden stop that has been planned, and supplies a control command indicating the calculated control target value to the drive system controller 107.

The direction controller 173 controls a direction to achieve the motion of the local car that has been planned by the motion planning unit 163 or the emergency avoidance unit 171. For example, the direction controller 173 calculates a control target value of a steering mechanism to achieve a traveling track or a sudden turn that has been planned by the motion planning unit 163 or the emergency avoidance unit 171, and supplies a control command indicating the calculated control target value to the drive system controller 107.

Note that the object distance detection processing described in the example described above is performed, for example, by applying the components described below.

Information acquired by a camera or a distance sensor that is configured as the data acquisition unit 102 is input to the outside-vehicle information detection unit 141 of the detection unit 131.

The outside-vehicle information detection unit 141 specifies an object serving as a distance detection target by using the information acquired by the camera or the distance sensor, and calculates a distance of the object.

Alternatively, a configuration may be employed in which the outside-vehicle information detection unit 141 specifies an object serving as a distance detection target by using the information acquired by the camera or the distance sensor, and outputs the specified information to the situation recognizer 153 of the situation analyzer 133, and the situation recognizer 153 calculates a distance of the object.

The calculated object distance is output to the planning unit 134 that determines a route of an automobile, and a movement plan for safe traveling is made.

Moreover, information relating to the route determined by the planning unit 134 is input to the motion controller 135 that controls a motion of the automobile, and the motion controller 135 controls the motion of the automobile.

[6. Example of configuration of information processing device]

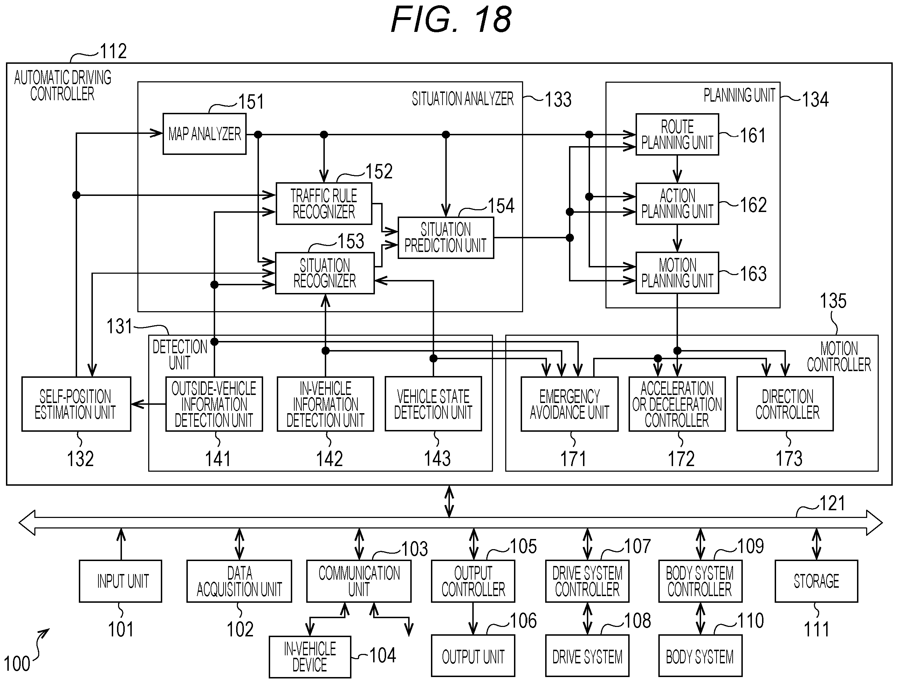

Fig. 18 illustrates the configuration of the vehicle control system 100 that can be attached in a movement device that performs the processing described above. In processing in the example described above, information detected by a variety of sensors such as a distance sensor or a camera can be input to an information processing device such as a PC, data processing can be performed, and a distance to an object, or a size or a position of the object can be calculated.

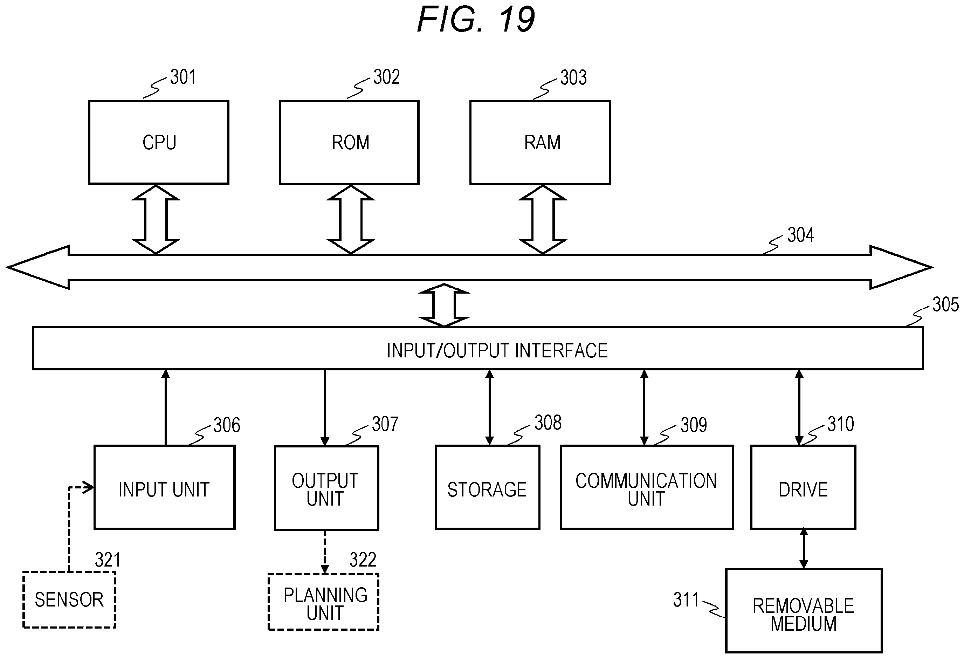

A specific hardware configuration example of an information processing device in this case is described with reference to Fig. 19.

Fig. 19 is a diagram illustrating a hardware configuration example of an information processing device such as a general PC.

A central processing unit (CPU) 301 functions as a data processing unit that performs various types of processing according to a program stored in a read only memory (ROM) 302 or a storage 308. For example, processing according to the sequence described in the example described above is performed. A random access memory (RAM) 303 stores a program executed by the CPU 301, data, or the like. The CPU 301, the ROM 302, and the RAM 303 that are described above are mutually connected via a bus 304.

The CPU 301 is connected to an input/output interface 305 via the bus 304, and the input/output interface 305 is connected to an input unit 306 that includes various switches, a keyboard, a touch panel, a mouse, a microphone, a situation data acquisition unit such as a sensor, a camera, or the GPS, and the like and an output unit 307 that includes a display, a speaker, or the like.

Note that input information from a sensor 321, such as a distance sensor or a camera, is also input to the input unit 306.

Furthermore, the output unit 307 also outputs a distance to an object, positional information of the object, or the like as information for the planning unit 322 such as a motion planning unit of a movement device.

The CPU 301 receives, as an input, a command, situation data, or the like that has been input from the input unit 306, performs various types of processing, and outputs a processing result, for example, to the output unit 307.

The storage 308 that is connected to the input/output interface 305 includes, for example, a hard disk or the like, and stores a program executed by the CPU 301 or various types of data. A communication unit 309 functions as a transmission/reception unit of data communication via a network such as the Internet or a local area network, and performs communication with an external device.

A drive 310 that is connected to the input/output interface 305 drives a removable medium 311 such as a magnetic disk, an optical disk, a magneto-optical disk, or a semiconductor memory, e.g., a memory card, and records or reads data.

[7. Summary of configuration according to the present disclosure]

Examples of the present disclosure have been described in detail above with reference to specified examples. However, it is obvious that those skilled in the art could make modifications or substitutions within the scope of the appended claims.

Furthermore, a series of processes described in the description can be performed by hardware or software, or a composite configuration of hardware and software. In a case where the series of processes is performed by software, a program recording a processing sequence can be installed in a memory within a computer that has been incorporated into dedicated hardware and can be executed, or the program can be installed in a general-purpose computer that can perform various types of processing and can be executed. For example, the program can be recorded in a recording medium in advance. The program can be installed in a computer from the recording medium, or the program can be received via a network such as a local area network (LAN) or the Internet, and can be installed in a recording medium such as an incorporated hard disk.

Note that various types of processing described in the description may be performed in series according to the description, or may be performed in parallel or individually according to a throughput of a device that performs the various types of processing or as needed. Furthermore, the system described herein is a logical aggregative configuration of a plurality of devices, and does not always include devices having respective configurations in the same housing.

INDUSTRIAL APPLICABILITY

As described above, by employing a configuration in one example of the present disclosure, a configuration is achieved that calculates an object distance on the basis of a captured image of a camera that captures an image in a direction that is orthogonal to a movement direction of a movement device or in a direction having an orthogonal component.

By employing the present configuration, a configuration is achieved that calculates an object distance on the basis of a captured image of a camera that captures an image in a direction that is orthogonal to a movement direction of a movement device.

REFERENCE SIGNS LIST

| | |
|---|---|
| 10 | Movement device |
| 11L | Leftward-direction camera |
| 11R | Rightward-direction camera |
| 12L | Leftward-direction distance sensor |
| 12R | Rightward-direction distance sensor |
| 100 | Vehicle control system |
| 101 | Input unit |
| 102 | Data acquisition unit |
| 103 | Communication unit |
| 104 | In-vehicle device |
| 105 | Output controller |
| 106 | Output unit |
| 107 | Drive system controller |
| 108 | Drive system |
| 109 | Body system controller |
| 110 | Body system |
| 111 | Storage |
| 112 | Automatic driving controller |
| 121 | Communication network |
| 131 | Detection unit |
| 132 | Self-position estimation unit |
| 141 | Outside-vehicle information detection unit |
| 142 | In-vehicle information detection unit |
| 143 | Vehicle state detection unit |
| 151 | Map analyzer |
| 152 | Traffic rule recognizer |
| 153 | Situation recognizer |
| 154 | Situation prediction unit |
| 161 | Route planning unit |
| 162 | Action planning unit |
| 163 | Motion planning unit |
| 171 | Emergency avoidance unit |
| 172 | Acceleration or deceleration controller |

| 173 | Direction controller |
|---|---|
| 301 | CPU |
| 302 | ROM |
| 303 | RAM |
| 304 | Bus |
| 305 | Input/output interface |
| 306 | Input unit |
| 307 | Output unit |
| 308 | Storage |
| 309 | Communication unit |
| 310 | Drive |
| 311 | Removable medium |
| 321 | Sensor |
| 322 | Planning unit |

**Claims**

1. An information processing device comprising:

a data processing unit that is configured to calculate an object distance between an object (31; 32; 41; 85; 91) and a camera (11L, 11R) on a basis of a captured image (40; 60; 80) of the camera (11L, 11R) that is configured to capture an image in a direction that is orthogonal to a movement direction of a movement device (10) or in a direction having a component that is orthogonal to the movement direction of the movement device (10), wherein the data processing unit is configured to:

detect a point at infinity (42; 62; 81) from the captured image (40; 60; 80), and calculate the object distance by using information relating to a positional relationship between a position of the point at infinity (42; 62; 81) that has been detected and a position of the object in the captured image (40; 60; 80), wherein the data processing unit has a function of detecting, from the captured image (40; 60; 80), a plurality of lines on a real world space that extends in a direction away from a camera position, and analyzing a change in line segment coordinates among image frames captured by the camera of a plurality of line segments that has been detected to determine that the plurality of line segments is a combination of parallel lines on the real world space, and estimates the point at infinity (42; 62; 81) of a group of the plurality of line segments.

2. The information processing device according to claim 1, wherein the data processing unit has a function of determining whether a plurality of line segments that has been detected is parallel line segments or non-parallel line segments.

3. The information processing device according to claim 1 or 2, wherein the data processing unit has a function of detecting that coordinates of a crossing peak of a combination of line segments that have been detected sequentially move among image frames captured by the camera in accordance with a translational movement of the movement device (10) .

4. The information processing device according to any one of claims 1 to 3, wherein the data processing unit is configured to:

calibrate the position of the point at infinity (42; 62; 81) that has been detected, and calculate the object distance by using the information relating to the positional relationship between the position that has been calibrated of the point at infinity (42; 62; 81) and the position of the object (31; 32; 41; 85; 91) in the captured image (40; 60; 80).

5. The information processing device according to any one of claims 1 to 4,

wherein the data processing unit is configured to calculate the object distance according to (Formula 1b) described below:

$$L = f \times (H/h) \qquad (\text{Formula 1b}),$$

when the object distance is L,
where
f: a focal length of the camera (11L, 11R),
H: a height from a reference plane of the camera (11L, 11R), and
h: a clearance between a contact point with the reference plane of the object (31; 32; 41; 85; 91) and the point at infinity (42; 62; 81) on the captured image (40; 60; 80), the clearance being a clearance in an image upward or downward direction.

6. The information processing device according to any one of claims 1 to 5,
wherein the data processing unit is configured to calculate the object distance by using the captured image (40; 60; 80) and information relating to a distance to a reference point P that is located closer to the camera (11L, 11R) than the object (31; 32; 41; 85; 91).

7. The information processing device according to claim 6,

wherein the data processing unit is configured to calculate the object distance according to (Formula 1a) described below:

$$L = Lref \times (href/h) \qquad (\text{Formula 1a}),$$

when the object distance is L,
where
Lref: an actual distance from the camera (11L, 11R) to the reference point P,
href: a clearance between the reference point P and the point at infinity (42; 62; 81) on the captured image (40; 60; 80), the clearance being a clearance in an image upward or downward direction, and
h: a clearance between a contact point with a reference plane of the object (31; 32; 41; 85; 91) and the point at infinity (42; 62; 81) on the captured image (40; 60; 80), the clearance being a clearance in the image upward or downward direction.

8. The information processing device according to any one of claims 1 to 7,
wherein the data processing unit is configured to determine an intersection point on extended lines of the plurality of parallel lines that has been detected to be the point at infinity (42; 62; 81).

9. The information processing device according to any one of claims 1 to 8,
wherein the data processing unit is configured to detect, from the captured image, a straight line on a real world that extends in a direction away from a camera position, wherein the direction of the straight line changes on the captured image in accordance with a movement of the camera (11L, 11R), and determine an intersection point on respective extended lines of the straight line, for which the direction changes on image frames captured by the camera (11L, 11R) in accordance with the movement of the camera (11L, 11R), to be the point at infinity (42; 62; 81).

10. The information processing device according to any one of claims 1 to 9,
wherein the data processing unit is configured to calculate a movement speed of the object (31; 32; 41; 85; 91) on a basis of a plurality of the object distances that corresponds to a plurality of image frames that has been captured by the camera (11L, 11R).

11. A movement device comprising:

a camera (11L, 11R) that captures an image in a direction that is orthogonal to a movement direction of the movement device (10) or in a direction having a component that is orthogonal to the movement direction of the movement device (10); and
an information processing device according to any one of claims 1 to 10,
wherein the data processing unit includes:

a planning unit (322) that is configured to determine a route of the movement device (10) on a basis of the object distance that has been calculated; and
a motion controller (135) that controls a motion of the movement device (10) according to the route that has been determined by the planning unit (322).

**12.** An information processing method performed by an information processing device,

wherein the information processing device includes a data processing unit that calculates an object distance between an object (31; 32; 41; 85; 91) and a camera (11L, 11R) on a basis of a captured image (40; 60; 80) of the camera (11L, 11R) that captures an image in a direction that is orthogonal to a movement direction of a movement device (10) or in a direction having a component that is orthogonal to the movement direction of the movement device (10), and
the data processing unit
detects a point at infinity (42; 62; 81) from the captured image (40; 60; 80), and
calculates the object distance by using information relating to a positional relationship between a position of the point at infinity (42; 62; 81) that has been detected and a position of the object (31; 32; 41; 85; 91) in the captured image (40; 60; 80),
wherein the data processing unit detects, from the captured image (40; 60; 80), a plurality of lines on a real world space that extends in a direction away from a camera position, and analyzing a change in line segment coordinates among image frames captured by the camera of a plurality of line segments that has been detected to determine that the plurality of line segments is a combination of parallel lines on the real world space, and estimates the point at infinity (42; 62; 81) of a group of the plurality of line segments.

**13.** A program that causes an information processing device to perform the information processing method according to claim 12.

**Patentansprüche**

**1.** Informationsverarbeitungsvorrichtung, die Folgendes umfasst:

eine Datenverarbeitungseinheit, die so ausgebildet ist, dass sie einen Objektabstand zwischen einem Objekt (31; 32; 41; 85; 91) und einer Kamera (11L, 11R) auf der Grundlage eines von der Kamera (11L, 11R) aufgenommenen Bildes (40; 60; 80) berechnet, wobei die Kamera so ausgebildet ist, dass sie ein Bild in einer Richtung, die orthogonal zu einer Bewegungsrichtung einer Bewegungsvorrichtung (10) ist, oder in einer Richtung mit einer Komponente, die orthogonal zu der Bewegungsrichtung der Bewegungsvorrichtung (10) ist, aufnimmt,
wobei die Datenverarbeitungseinheit für Folgendes ausgebildet ist:

Erkennen eines Unendlichkeitspunkts (42; 62; 81) aus dem aufgenommenen Bild (40; 60; 80), und
Berechnen des Objektabstands unter Verwendung von Informationen, die sich auf eine Positionsbeziehung zwischen einer Position des erkannten Unendlichkeitspunkts (42; 62; 81) und einer Position des Objekts in dem aufgenommenen Bild (40; 60; 80) beziehen,
wobei die Datenverarbeitungseinheit die Funktion hat, aus dem aufgenommenen Bild (40; 60; 80) eine Vielzahl von Linien auf einem realen Raum zu erkennen, der sich in einer Richtung weg von einer Kameraposition erstreckt, und eine Änderung der Liniensegmentkoordinaten zwischen Bildrahmen zu analysieren, die von der Kamera aus einer Vielzahl von Liniensegmenten erkannt wurden, um zu bestimmen, dass die Vielzahl von Liniensegmenten eine Kombination von parallelen Linien auf dem realen Raum ist, und den Unendlichkeitspunkt (42; 62; 81) einer Gruppe der Vielzahl von Liniensegmenten zu schätzen.

**2.** Informationsverarbeitungsvorrichtung gemäß Anspruch 1,
wobei die Datenverarbeitungseinheit die Funktion hat zu bestimmen, ob es sich bei einer Vielzahl von erkannten Liniensegmenten um parallele Liniensegmente oder nicht-parallele Liniensegmente handelt.

**3.** Informationsverarbeitungsvorrichtung gemäß Anspruch 1 oder 2,
wobei die Datenverarbeitungseinheit die Funktion hat zu erkennen, dass sich die Koordinaten einer sich kreuzenden Spitze einer Kombination von Liniensegmenten, die sequentiell erkannt worden sind, zwischen den von der Kamera aufgenommenen Bildrahmen in Übereinstimmung mit einer Translationsbewegung der Bewegungsvorrichtung (10) bewegen.

**4.** Informationsverarbeitungsvorrichtung gemäß einem der Ansprüche 1 bis 3,
wobei die Datenverarbeitungseinheit für Folgendes ausgebildet ist:

Kalibrieren der Position des erkannten Unendlichkeitspunkts (42; 62; 81), und
Berechnen des Objektabstands unter Verwendung der Informationen bezüglich der Positionsbeziehung zwischen der kalibrierten Position des Unendlichkeitspunkts (42; 62; 81) und der Position des Objekts (31; 32; 41; 85; 91) im aufgenommenen Bild (40; 60; 80).

**5.** Informationsverarbeitungsvorrichtung gemäß einem der Ansprüche 1 bis 4,

wobei die Datenverarbeitungseinheit so ausgebildet ist, dass sie den Objektabstand gemäß der unten beschriebenen (Formel 1b) berechnet:

$$L = f \times (H/h) \quad (Formel\ 1b),$$

wenn der Objektabstand L ist,
wobei
f: eine Brennweite der Kamera (11L, 11R),
H: eine Höhe von einer Bezugsebene der Kamera (11L, 11R), und
h: ein Abstand zwischen einem Kontaktpunkt mit der Referenzebene des Objekts (31; 32; 41; 85; 91) und dem Unendlichkeitspunkt (42; 62; 81) auf dem aufgenommenen Bild (40; 60; 80), wobei der Abstand ein Abstand in einer Aufwärts- oder Abwärtsrichtung des Bildes ist.

**6.** Informationsverarbeitungsvorrichtung gemäß einem der Ansprüche 1 bis 5,
wobei die Datenverarbeitungseinheit so ausgebildet ist, dass sie den Objektabstand unter Verwendung des aufgenommenen Bildes (40; 60; 80) und von Informationen bezüglich eines Abstands zu einem Referenzpunkt P berechnet, der sich näher an der Kamera (11L, 11R) befindet als das Objekt (31; 32; 41; 85; 91).

**7.** Informationsverarbeitungsvorrichtung gemäß Anspruch 6,

wobei die Datenverarbeitungseinheit so ausgebildet ist, dass sie den Objektabstand gemäß der unten beschriebenen Formel 1a berechnet:

$$L = Lref * (href/h) \quad (Formel\ 1a),$$

wenn der Objektabstand L ist,
wobei
Lref: ein tatsächlicher Abstand von der Kamera (11L, 11R) zum Referenzpunkt P,
href: ein Abstand zwischen dem Referenzpunkt P und dem Unendlichkeitspunkt (42; 62; 81) auf dem aufgenommenen Bild (40; 60; 80), wobei der Abstand ein Abstand in einer Aufwärts- oder Abwärtsrichtung des Bildes ist, und
h: ein Abstand zwischen einem Kontaktpunkt mit einer Referenzebene des Objekts (31; 32; 41; 85; 91) und dem Unendlichkeitspunkt (42; 62; 81) auf dem aufgenommenen Bild (40; 60; 80), wobei der Abstand ein Abstand in der Aufwärts- oder Abwärtsrichtung des Bildes ist.

**8.** Informationsverarbeitungsvorrichtung gemäß einem der Ansprüche 1 bis 7,
wobei die Datenverarbeitungseinheit so ausgebildet ist, dass sie einen Schnittpunkt auf verlängerten Linien der Vielzahl von parallelen Linien bestimmt, der als der Unendlichkeitspunkt (42; 62; 81) erkannt worden ist.

**9.** Informationsverarbeitungsvorrichtung gemäß einem der Ansprüche 1 bis 8,

wobei die Datenverarbeitungseinheit so ausgebildet ist, dass sie aus dem aufgenommenen Bild eine gerade Linie auf einer realen Welt erkennt, die sich in einer Richtung weg von einer Kameraposition erstreckt,
wobei sich die Richtung der geraden Linie auf dem aufgenommenen Bild in Übereinstimmung mit einer Bewegung der Kamera (11L, 11R) ändert, und einen Schnittpunkt auf jeweiligen verlängerten Linien der geraden Linie, für die sich die Richtung auf von der Kamera (11L, 11R) aufgenommenen Bildrahmen in Übereinstimmung mit der Bewegung der Kamera (11L, 11R) ändert, als den Unendlichkeitspunkt (42; 62; 81) bestimmen.

10. Informationsverarbeitungsvorrichtung gemäß einem der Ansprüche 1 bis 9,
wobei die Datenverarbeitungseinheit so ausgebildet ist, dass sie eine Bewegungsgeschwindigkeit des Objekts (31; 32; 41; 85; 91) auf der Grundlage einer Vielzahl von Objektabständen berechnet, die einer Vielzahl von Bildrahmen entsprechen, die von der Kamera (11L, 11R) aufgenommen wurden.

11. Bewegungsvorrichtung, die Folgendes umfasst:

eine Kamera (11L, 11R), die ein Bild in einer Richtung, die orthogonal zu einer Bewegungsrichtung der Bewegungsvorrichtung (10) ist, oder in einer Richtung mit einer Komponente, die orthogonal zu der Bewegungsrichtung der Bewegungsvorrichtung (10) ist, aufnimmt; und
eine Informationsverarbeitungsvorrichtung gemäß einem der Ansprüche 1 bis 10,
wobei die Datenverarbeitungseinheit Folgendes aufweist:

eine Planungseinheit (322), die so ausgebildet ist, dass sie eine Route der Bewegungsvorrichtung (10) auf der Grundlage des berechneten Objektabstands bestimmt; und
einen Motion-Controller (135), der eine Bewegung der Bewegungsvorrichtung (10) entsprechend der von der Planungseinheit (322) ermittelten Route steuert.

12. Informationsverarbeitungsverfahren, das von einer Informationsverarbeitungsvorrichtung durchgeführt wird,

wobei die Informationsverarbeitungsvorrichtung eine Datenverarbeitungseinheit aufweist, die einen Objektabstand zwischen einem Objekt (31; 32; 41; 85; 91) und einer Kamera (11L, 11R) auf der Grundlage eines von der Kamera (11L, 11R) aufgenommenen Bildes (40; 60; 80) berechnet, wobei die Kamera ein Bild in einer Richtung, die orthogonal zu einer Bewegungsrichtung einer Bewegungsvorrichtung (10) ist, oder in einer Richtung mit einer Komponente, die orthogonal zu der Bewegungsrichtung der Bewegungsvorrichtung (10) ist, aufnimmt, und
die Datenverarbeitungseinheit einen Unendlichkeitspunkt (42; 62; 81) aus dem aufgenommenen Bild (40; 60; 80) erkennt und den Objektabstand unter Verwendung von Informationen berechnet, die sich auf eine Positionsbeziehung zwischen einer Position des erkannten Unendlichkeitspunkts (42; 62; 81) und einer Position des Objekts (31; 32; 41; 85; 91) in dem aufgenommenen Bild (40; 60; 80) beziehen,
wobei die Datenverarbeitungseinheit aus dem aufgenommenen Bild (40; 60; 80) eine Vielzahl von Linien auf einem realen Raum erkennt, der sich in einer Richtung weg von einer Kameraposition erstreckt, und eine Änderung der Liniensegmentkoordinaten zwischen Bildrahmen, die von der Kamera aus einer Vielzahl von Liniensegmenten aufgenommen wurden, analysiert, um zu bestimmen, dass die Vielzahl von Liniensegmenten eine Kombination von parallelen Linien auf dem realen Raum ist, und den Unendlichkeitspunkt (42; 62; 81) einer Gruppe der Vielzahl von Liniensegmenten schätzt.

13. Programm, das eine Informationsverarbeitungsvorrichtung veranlasst, das Informationsverarbeitungsverfahren gemäß Anspruch 12 durchzuführen.

## Revendications

1. Dispositif de traitement d'informations comprenant :

une unité de traitement de données qui est configurée pour calculer une distance d'objet entre un objet (31 ; 32 ; 41 ; 85 ; 91) et une caméra (11L, 11R) sur la base d'une image capturée (40 ; 60 ; 80) de la caméra (11L, 11R) qui est configurée pour capturer une image dans une direction qui est orthogonale à une direction de mouvement d'un dispositif de mouvement (10) ou dans une direction ayant une composante qui est orthogonale à la direction de mouvement du dispositif de mouvement (10), où l'unité de traitement de données est configurée pour : détecter un point à l'infini (42 ; 62 ; 81) à partir de l'image capturée (40 ; 60 ; 80), et
calculer la distance de l'objet en utilisant des informations relatives à une relation positionnelle entre une position du point à l'infini (42 ; 62 ; 81) qui a été détecté et une position de l'objet dans l'image capturée (40 ; 60 ; 80), où l'unité de traitement de données a une fonction de détection, à partir de l'image capturée (40 ; 60 ; 80), d'une pluralité de lignes sur un espace du monde réel qui s'étend dans une direction s'éloignant d'une position de la caméra, et d'analyse d'un changement de coordonnées de segments de ligne parmi des trames d'image capturées par la caméra d'une pluralité de segments de ligne qui a été détectée pour déterminer que la pluralité de segments de ligne est une combinaison de lignes parallèles dans l'espace du monde réel, et estime le point à l'infini (42 ; 62 ; 81) d'un groupe de la pluralité de segments de ligne.

**2.** Dispositif de traitement d'informations selon la revendication 1,
dans lequel l'unité de traitement de données a pour fonction de déterminer si une pluralité de segments de ligne qui a été détectée est constituée de segments de ligne parallèles ou de segments de ligne non parallèles.

**3.** Dispositif de traitement d'informations selon la revendication 1 ou la revendication 2,
dans lequel l'unité de traitement de données a pour fonction de détecter que les coordonnées d'un pic de croisement d'une combinaison de segments de ligne qui ont été détectés se déplacent séquentiellement parmi des trames d'image capturées par la caméra en fonction d'un mouvement de translation du dispositif de mouvement (10).

**4.** Dispositif de traitement d'informations selon l'une quelconque des revendications 1 à 3,
dans lequel l'unité de traitement de données est configurée pour :

calibrer la position du point à l'infini (42 ; 62 ; 81) qui a été détecté, et
calculer la distance de l'objet en utilisant les informations relatives à la relation positionnelle entre la position qui a été calibrée du point à l'infini (42 ; 62 ; 81) et la position de l'objet (31 ; 32 ; 41 ; 85 ; 91) dans l'image capturée (40 ; 60 ; 80).

**5.** Dispositif de traitement d'informations selon l'une quelconque des revendications 1 à 4,

dans lequel l'unité de traitement de données est configurée pour calculer la distance de l'objet selon la (formule 1b) décrite ci-dessous :

$$L = f \times (H/h) \quad \text{(Formule 1b)},$$

lorsque la distance de l'objet est L,
où :

f : longueur focale de la caméra (11L, 11R),
H : hauteur par rapport à un plan de référence de la caméra (11L, 11R), et
h : espace entre un point de contact avec le plan de référence de l'objet (31 ; 32 ; 41 ; 85 ; 91) et le point à l'infini (42 ; 62 ; 81) sur l'image capturée (40 ; 60 ; 80), l'espace étant un espace dans une direction ascendante ou descendante de l'image.

**6.** Dispositif de traitement d'informations selon l'une quelconque des revendications 1 à 5,
dans lequel l'unité de traitement de données est configurée pour calculer la distance de l'objet en utilisant l'image capturée (40 ; 60 ; 80) et des informations relatives à une distance à un point de référence P qui est situé plus près de la caméra (11L, 11R) que l'objet (31 ; 32 ; 41 ; 85 ; 91).

**7.** Dispositif de traitement d'informations selon la revendication 6,

dans lequel l'unité de traitement de données est configurée pour calculer la distance de l'objet selon la (Formule 1a) décrite ci-dessous :

$$L = f \times (H/h) \quad \text{(Formule 1b)},$$

lorsque la distance de l'objet est L,
où :

Lref : distance réelle entre la caméra (11L, 11R) et le point de référence P,
href : espace entre le point de référence P et le point à l'infini (42 ; 62 ; 81) sur l'image capturée (40 ; 60 ; 80), l'espace étant un espace dans une direction ascendante ou descendante de l'image, et
h : espace entre un point de contact avec un plan de référence de l'objet (31 ; 32 ; 41 ; 85 ; 91) et le point à l'infini (42 ; 62 ; 81) sur l'image capturée (40 ; 60 ; 80), l'espace étant un espace dans la direction de l'image vers le haut ou vers le bas.

8. Dispositif de traitement d'informations selon l'une quelconque des revendications 1 à 7, dans lequel l'unité de traitement de données est configurée pour déterminer un point d'intersection sur des lignes étendues de la pluralité de lignes parallèles qui a été détecté comme étant le point à l'infini (42 ; 62 ; 81).

9. Dispositif de traitement d'informations selon l'une quelconque des revendications 1 à 8, dans lequel l'unité de traitement de données est configurée pour détecter, à partir de l'image capturée, une ligne droite sur un monde réel qui s'étend dans une direction s'éloignant d'une position de la caméra, où la direction de la ligne droite change sur l'image capturée conformément à un mouvement de la caméra (11L, 11R), et déterminer un point d'intersection sur des lignes étendues respectives de la ligne droite, pour laquelle la direction change sur des trames d'image capturées par la caméra (11L, 11R) conformément au mouvement de la caméra (11L, 11R), comme étant le point à l'infini (42 ; 62 ; 81).

10. Dispositif de traitement d'informations selon l'une quelconque des revendications 1 à 9, dans lequel l'unité de traitement de données est configurée pour calculer une vitesse de déplacement de l'objet (31 ; 32 ; 41 ; 85 ; 91) sur la base d'une pluralité de distances de l'objet qui correspondent à une pluralité de trames d'image qui ont été capturées par la caméra (11L, 11R).

11. Dispositif de mouvement comprenant :

une caméra (11L, 11R) qui capture une image dans une direction qui est orthogonale à une direction de mouvement du dispositif de mouvement (10) ou dans une direction ayant une composante qui est orthogonale à la direction de mouvement du dispositif de mouvement (10) ; et
un dispositif de traitement d'informations selon l'une quelconque des revendications 1 à 10,
où l'unité de traitement de données comprend :

une unité de planification (322) qui est configurée pour déterminer un itinéraire du dispositif de mouvement (10) sur la base de la distance de l'objet qui a été calculée ; et
un contrôleur de mouvement (135) qui contrôle un mouvement du dispositif de mouvement (10) selon l'itinéraire qui a été déterminé par l'unité de planification (322).

12. Procédé de traitement d'informations exécuté par un dispositif de traitement d'informations,

où le dispositif de traitement d'informations inclut une unité de traitement de données qui calcule une distance d'objet entre un objet (31 ; 32 ; 41 ; 85 ; 91) et une caméra (11L, 11R) sur la base d'une image capturée (40 ; 60 ; 80) de la caméra (11L, 11R) qui capture une image dans une direction qui est orthogonale à une direction de mouvement d'un dispositif de mouvement (10) ou dans une direction ayant une composante qui est orthogonale à la direction de mouvement du dispositif de mouvement (10), et
l'unité de traitement de données :

détecte un point à l'infini (42 ; 62 ; 81) à partir de l'image capturée (40 ; 60 ; 80), et
calcule la distance de l'objet en utilisant des informations relatives à une relation positionnelle entre une position du point à l'infini (42 ; 62 ; 81) qui a été détecté et une position de l'objet (31 ; 32 ; 41 ; 85 ; 91) dans l'image capturée (40 ; 60 ; 80),
où l'unité de traitement de données détecte, à partir de l'image capturée (40 ; 60 ; 80), une pluralité de lignes sur un espace du monde réel qui s'étend dans une direction s'éloignant d'une position de la caméra, et analyse un changement des coordonnées des segments de ligne parmi les trames d'image capturées par la caméra d'une pluralité de segments de ligne qui a été détectée pour déterminer que la pluralité de segments de ligne est une combinaison de lignes parallèles dans l'espace du monde réel, et estime le point à l'infini (42 ; 62 ; 81) d'un groupe de la pluralité de segments de ligne.

13. Programme qui amène un dispositif de traitement d'informations à exécuter le procédé de traitement d'informations selon la revendication 12.

## FIG. 1

10 AUTOMOBILE (MOVEMENT DEVICE)

11R RIGHTWARD-DIRECTION CAMERA

11L LEFTWARD-DIRECTION CAMERA

12R RIGHTWARD-DIRECTION DISTANCE SENSOR

12L LEFTWARD-DIRECTION DISTANCE SENSOR

EP 3 770 549 B1

# FIG. 2

31 OBJECT (PEDESTRIAN)

32 OBJECT (VEHICLE)

21R RIGHTWARD-DIRECTION CAMERA IMAGING RANGE

22R RIGHTWARD-DIRECTION DISTANCE SENSOR DISTANCE MEASUREMENT RANGE (FOR EXAMPLE, 0 TO 10m)

10 AUTOMOBILE

22L LEFTWARD-DIRECTION DISTANCE SENSOR DISTANCE MEASUREMENT RANGE (FOR EXAMPLE, 0 TO 10m)

21L LEFTWARD-DIRECTION CAMERA IMAGING RANGE

# FIG. 3

**10 AUTOMOBILE**

**11R RIGHTWARD-DIRECTION CAMERA**

**40 CAPTURED IMAGE**

**42 POINT AT INFINITY O**

**41 REFERENCE POINT P**

**31 OBJECT (PEDESTRIAN)**

h: CLEARANCE BETWEEN OBJECT GROUND CONTRACT POINT AND POINT AT INFINITY

$h_{ref}$: CLEARANCE BETWEEN REFERENCE POINT GROUND CONTACT POINT AND POINT AT INFINITY

INFINITY HORIZONTAL LINE

31 OBJECT (PEDESTRIAN)

41 REFERENCE POINT P

h: CLEARANCE BETWEEN OBJECT GROUND CONTRACT POINT AND POINT AT INFINITY

CALCULATION FORMULA OF OBJECT DISTANCE L
$$L = L_{ref} * (h_{ref}/h) = f * (H/h)$$
f: FOCAL LENGTH, H: CAMERA INSTALLATION HEIGHT
h: CLEARANCE OF ROAD SURFACE GROUND CONTACT POINT FROM ∞ OF PROJECTION

EP 3 770 549 B1

## FIG. 4

32 OBJECT (VEHICLE)

10 AUTOMOBILE

50 PARKING LOT

# FIG. 5

60 CAPTURED IMAGE

62 POINT AT INFINITY O

11L LEFTWARD-DIRECTION CAMERA

10 AUTOMOBILE

61a PARALLEL LINE a

61b PARALLEL LINE b

61c PARALLEL LINE c

61d PARALLEL LINE d

## FIG. 6

60 CAPTURED IMAGE

62 POINT AT INFINITY O

$h$: CLEARANCE BETWEEN OBJECT GROUND CONTRACT POINT AND POINT AT INFINITY

$h$

$h_{ref}$: CLEARANCE BETWEEN REFERENCE POINT GROUND CONTACT POINT AND POINT AT INFINITY

$h_{ref}$

63 REFERENCE POINT P

64 OBJECT (VEHICLE)

EP 3 770 549 B1

## FIG. 7

62 POINT AT INFINITY O

70 COMPOSITE IMAGE FOR CALCULATION OF POINT AT INFINITY

(1) IMAGE FRAME (f(t1))

71(1) INDIVIDUAL DETECTED LINE

(2) IMAGE FRAME (f(t2))

71(2) INDIVIDUAL DETECTED LINE

(n) IMAGE FRAME (f(tn))

71(n) INDIVIDUAL DETECTED LINE

TIME (t1)

TIME (t2)

TIME (tn)

FIG. 8

# FIG. 9

80 LEFTWARD-DIRECTION CAMERA CAPTURED IMAGE

81 POINT AT INFINITY O

85 OBJECT (PEDESTRIAN)

82 CLOSE OBJECT (REFERENCE POINT P)

10 AUTOMOBILE

EP 3 770 549 B1

## FIG. 10

80 LEFTWARD-DIRECTION CAMERA CAPTURED IMAGE

81 POINT AT INFINITY O

85 OBJECT (PEDESTRIAN)

$h$: CLEARANCE BETWEEN OBJECT GROUND CONTRACT POINT AND POINT AT INFINITY

$h_{ref}$: CLEARANCE BETWEEN REFERENCE POINT GROUND CONTACT POINT AND POINT AT INFINITY

82 CLOSE OBJECT (REFERENCE POINT P)

10 AUTOMOBILE

## FIG. 11

91 OBJECT (VEHICLE)

ROAD WIDTH W (IMAGE SIZE) IN OBJECT POSITION

ESTIMATED OBJECT DISTANCE L IS $L = L_{ref} \times (w_{ref}/w)$

W

92 CLOSE OBJECT (REFERENCE POINT P)

$L_{ref}$

$w_{ref}$

L

ROAD WIDTH Wref (IMAGE SIZE) IN CLOSE OBJECT POSITION

EP 3 770 549 B1

# FIG. 12

(1)

f*tan(β)

Lturn

β

π/2-β

BIRD'S-EYE VIEW OF ROAD PLANE PARALLEL LINES

Lturn

10 AUTOMOBILE

(2)

f*tan(β)

f*tan(α)

Lslope

ROAD SURFACE SECTION AND INCLINED PART WITH RESPECT TO PLANE IN DIRECTION OF VEHICLE TRAVELING PLANE (INCLINATION ANGLE α IN POSITION BEYOND DISTANCE Lslope)

10 AUTOMOBILE

α

α

Lslope

Lturn, Lslope: DISTANCE FROM CAMERA REFERENCE POSITION TO POINT AT WHICH ROAD HAS ANGLE

# FIG. 13

$f*\tan(\gamma)$

VISUAL "POINT AT INFINITY"

"EXECUTION VANISHING POINT"
ROTATE ACCORDING TO TRANSLATION
OF VEHICLE AT POINT AT INFINITY IN
ORIENTATION $\beta$ ON IMAGING
PROJECTION SCREEN OF BROKEN-LINE
PART OF TAPERED ROAD
THAT FORMS ANGLE $\beta$ WITH CLOSE
PARALLEL LINE SEGMENT

Lnrw

VISUAL "POINT AT INFINITY"
OF BROKEN-LINE PART
GENERATED BY TAPERED ROAD

$\gamma$

$\pi/2-\gamma$

Lnrw

Lnrw: DISTANCE FROM CAMERA
REFERENCE POSITION TO ROAD
TAPER STARTING POINT

10 AUTOMOBILE

EP 3 770 549 B1

## FIG. 14

ARBITRARY FEATURE POINT ON ROAD SURFACE MAY BE DETECTED,
AND MAY BE FURTHER USED AUXILIARILY.
RELATIONSHIP WITH MOVEMENT AMOUNT AMONG FRAMES
ACCORDING TO MOVEMENT OF VEHICLE IS EXPRESSED AS THE FOLLOWING.

$$L = L_{REF} / \Delta M_{REF} * (1 / \Delta M)$$

EP 3 770 549 B1

*FIG. 15*

Estimated object distance L is $L = f \times (Wrw / W)$

Wrw = actual size of license plate

91 OBJECT (VEHICLE)

12-34

W

L

## FIG. 16

START

S101 — HAS DISTANCE CALCULATION TARGET OBJECT BEEN DETECTED IN CAMERA CAPTURED IMAGE? — No

Yes

S102 — HAS PLURALITY OF PARALLEL LINES THAT CAN BE APPLIED TO DETECTION OF POINT AT INFINITY BEEN DETECTED FROM IMAGE? — No

Yes

S103 — HAS SINGLE LINE SEGMENT THAT CAN BE APPLIED TO DETECTION OF POINT AT INFINITY BEEN DETECTED FROM IMAGE? — No

Yes

S104 — DETECT POINT AT INFINITY FROM IMAGE

S105 — CALCULATE OBJECT DISTANCE L ACCORDING TO (FORMULA 1) DESCRIBED BELOW

$$L = Lref \times (href / h) = f \times (H / h) \cdot \cdot (FORMULA\ 1)$$

END

S201

EP 3 770 549 B1

## FIG. 17

S103 = No

S201
HAS CLOSE OBJECT
THAT CAN BE REFERENCE POINT AND TO
WHICH DISTANCE CAN BE CALCULATED BEEN
DETECTED FROM IMAGE?

No →

Yes ↓

S202
DETERMINE CLOSE OBJECT TO BE
REFERENCE POINT P, AND CALCULATE DISTANCE
TO REFERENCE POINT P

S211
HAS COMPONENT HAVING
KNOWN ACTUAL SIZE BEEN DETECTED IN
DISTANCE CALCULATION TARGET
OBJECT IMAGE?

No →

Yes ↓

S203
CALCULATE OBJECT DISTANCE L ACCORDING TO
(FORMULA 2) DESCRIBED BELOW
$L = Lref \times (Wref / W) \cdot \cdot$ (FORMULA 2)

S212
CALCULATE OBJECT DISTANCE L ACCORDING TO
(FORMULA 3) DESCRIBED BELOW
$L = f \times (Wrw / W) \cdot \cdot$ (FORMULA 3)

END

EP 3 770 549 B1

# FIG. 18

## FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017191471 A
- JP 2009067292 A
- JP 2016009331 A